(19) Europäisches Patentamt / European Patent Office / Office européen des brevets

(11) **EP 3 410 104 B1**

(12) **EUROPÄISCHE PATENTSCHRIFT**

(45) Veröffentlichungstag und Bekanntmachung des Hinweises auf die Patenterteilung:
**01.07.2020   Patentblatt 2020/27**

(51) Int Cl.:
***G01N 23/222*** *(2006.01)*

(21) Anmeldenummer: **17401060.3**

(22) Anmeldetag: **31.05.2017**

(54) **VERFAHREN UND VORRICHTUNG ZUR MULTIELEMENTANALYSE BASIEREND AUF NEUTRONENAKTIVIERUNG SOWIE VERWENDUNG**

METHOD AND DEVICE FOR MULTI-ELEMENT ANALYSIS BASED ON NEUTRON ACTIVATION AND USE

PROCÉDÉ ET DISPOSITIF D'ANALYSE MULTI-ÉLÉMENT BASÉ SUR L'ACTIVATION PAR NEUTRONS ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.12.2018   Patentblatt 2018/49**

(73) Patentinhaber: **Aachen Institute for Nuclear Training GmbH**
**52222 Stolberg (DE)**

(72) Erfinder:
• **HAVENITH, Andreas**
**52222 Stolberg (DE)**

• **KRYCKI, Kai**
**52064 Aachen (DE)**
• **KETTLER, John**
**52459 Inden (DE)**

(74) Vertreter: **Tanner, Lukas**
**Revier IP**
**Neustrasse 17**
**44787 Bochum (DE)**

(56) Entgegenhaltungen:
DE-A1- 10 215 070      DE-B- 1 236 831
GB-A- 2 083 212      US-A1- 2012 046 867

**Beschreibung**

TECHNISCHES GEBIET

Die vorliegende Erfindung betrifft ein Verfahren zur Multielementanalyse basierend auf Neutronenaktivierung durch Bestrahlen einer Probe mit Neutronen. Ferner betrifft die vorliegende Erfindung eine entsprechende Vorrichtung, insbesondere mit wenigstens einem kollimierbaren Detektor. Nicht zuletzt betrifft die vorliegende Erfindung auch die Verwendung einer Steuerungseinrichtung oder eines Computerprogrammproduktes dafür. Insbesondere betrifft die Erfindung ein Verfahren und eine Vorrichtung gemäß dem Oberbegriff des jeweiligen unabhängigen Anspruchs.

HINTERGRUND DER ERFINDUNG

In vielen Bereichen der Industrie kommt der Analyse von Stoffen oder Materialien insbesondere bezüglich derer Elementzusammensetzung hohe Bedeutung zu, insbesondere bezüglich Gefahrgut oder Abfällen oder Recycling-Materialien oder Rohstoffen oder der Qualitätskontrolle von Halbzeugen oder Industrieprodukten. Eines der bisher durchgeführten Analyseverfahren ist die so genannte Multielementanalyse, mittels welcher einzelne Elemente einer Probe bestimmt werden, ohne dass vorher die exakte Zusammensetzung der Probe bekannt sein muss.

Die Multielementanalyse kann mittels Neutronenaktivierung oder beispielsweise auch mittels Röntgenfluoreszenzanalyse oder Massenspektrometrie erfolgen. Multielementanalyse mittels Neutronenaktivierung erfolgt bisher durch ein Bestrahlen gemäß bestimmter Zeitvorgaben. Es hat sich gezeigt, dass eine gute Aussagekraft der Messergebnisse dann sichergestellt werden kann, wenn bei gepulster Neutronenbestrahlung prompte Gammastrahlung nach einem gewissen Zeitfenster in Abhängigkeit der Art und Weise der gepulsten Bestrahlung ausgewertet wird. Das Zeitfenster für die Detektion der Gammastrahlung wird nach einer Wartezeit, die am Ende eines jeden Neutronenpuls folgt, begonnen und endet bevor der nächste Neutronenpuls emittiert wird.

Die WO 2012/010162 A1 und die DE 10 2010 031 844 A1 beschreiben ein Verfahren zur zerstörungsfreien Elementanalyse großvolumiger Proben mit Neutronenstrahlung sowie eine Vorrichtung zur Durchführung des Verfahrens. Bei dem Verfahren wird die Probe gepulst mit schnellen Neutronen bestrahlt, wobei die von der Probe ausgesendete/emittierte Gammastrahlung nach einem gewissen Zeitfenster nach einem Neutronenpuls gemessen wird, bevor ein neuer Neutronenpuls auf die Probe emittiert wird. Die Gammastrahlung wird zwischen den einzelnen Neutronenpulsen gemessen. Die Menge eines in der Probe enthaltenen Elements wird nach Abzug des durch die Probe und/oder durch die Messanlage generierten Untergrundsignals aus einer Flächeninhaltsanalyse eines Photopeaks ausgewertet. Dabei erfolgt die Bestimmung des Neutronenflusses im Zusammenhang mit einer metallischen Umhüllung der Probe (Neutronenflussmonitor). Das Messverfahren beruht dabei auch auf der Erkenntnis, dass die Messung durch einen Moderationsprozess und durch das Einhalten eines Zeitfensters nach einem jeweiligen Neutronenpuls ermöglicht werden kann. Die Detektion im Detektor von induzierter Gammastrahlung, resultierend aus inelastischen Wechselwirkungen, kann aufgrund des Zeitfensters nach einem jeweiligen Neutronenpuls herausgefiltert und somit bei der Messung ausgeblendet werden. Als Gammastrahlung wird prompte Gammastrahlung ausgewertet.

Auch EP 1 882 929 B1 und WO 01/07888 A2 beschreiben Verfahren, bei welchen Neutronen gepulst auf die Probe abgestrahlt werden und nach jedem Puls ein Zeitfenster eingehalten wird, bis die von der Probe emittierte prompte Gammastrahlung gemessen wird. Vergleichbare Verfahren werden z.B. auch in EP 0 493 545 B1 und in DE 10 2007 029 778 B4 beschrieben. Ferner sind die folgenden Veröffentlichungen zu nennen, aus denen teilweise auch eine ungepulste, kontinuierliche Bestrahlung von Proben bekannt ist: US 2012/046867A1, DE 102 15 070A1, DE 12 36 831 B, GB 2 083 212 A.

Aufgabe ist, ein Verfahren und eine Vorrichtung bereitzustellen, womit die Multielementanalyse von Proben mittels Neutronenaktivierung erleichtert werden kann. Auch eine Aufgabe ist, ein Verfahren und eine Vorrichtung zur Multielementanalyse mittels Neutronenaktivierung so auszugestalten, dass sich ein breites Anwendungsfeld ergibt. Nicht zuletzt ist es eine Aufgabe, ein möglichst flexibles zerstörungsfreies Verfahren und eine entsprechende Vorrichtung zur Multielementanalyse basierend auf Neutronenaktivierung mit einer hohen Güte bzw. mit einer sehr zuverlässigen, sicheren Art und Weise der Messung und Auswertung emittierter Gammastrahlung bereitzustellen, selbst für den Fall dass eine zu untersuchende Probe bzgl. der Elementzusammensetzung und der Probengeometrie schwierig zu analysieren sein sollte und/oder eine zerstörende bzw. beeinflussende Teilprobenahme von der zu untersuchenden Probe nicht gewünscht ist.

ZUSAMMENFASSUNG DER ERFINDUNG

Zumindest eine dieser Aufgaben wird durch ein Verfahren gemäß Anspruch 1 sowie durch eine Vorrichtung gemäß dem nebengeordneten Vorrichtungsanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Erfindungsgemäß wird vorgeschlagen, dass das Bestrahlen einer Probe ungepulst auf kontinuierliche Weise erfolgt, wobei das Messen zeitunabhängig von der Bestrahlung (unabhängig vom zeitlichen Verlauf der Bestrahlung), insbesondere ohne durch Neutronenpulse vorgegebene Zeitfenster, während des Bestrahlens erfolgt, insbesondere simultan zur Bestrahlung über denselben Zeitraum wie die Bestrahlung, insbesondere kontinuierlich während des Bestrahlens.

Hierdurch kann ein zerstörungsfreies Verfahren zur Multielementanalyse basierend auf Neutronenaktivierung für diverse Arten von Proben und bei hoher messtechnischer Flexibilität und belastbaren, reproduzierbaren, zuverlässigen Ergebnissen bereitgestellt werden. Die Probe wird kontinuierlich ohne Einzelpulse mit Neutronen bestrahlt, beispielsweise kontinuierlich über einen Zeitraum von mehreren Sekunden oder Minuten oder Stunden, wobei simultan zur Bestrahlung die von der Probe ausgesendete/emittierte Gammastrahlung gemessen werden kann. Es hat sich gezeigt, dass die Neutronen dabei insbesondere mittels eines Generators eingerichtet zur Fusion von Deuteronen (Deuteriumkerne) generiert werden können, insbesondere mit Deuteriumgas als gasförmiges Target bzw. als Betriebsstoff. Die vorliegende Erfindung ermöglicht das Messen und Auswerten basierend auf vergleichsweise niederenergetischer Bestrahlung über einen langen Zeitraum, wodurch sich die Analyse sehr exakt und reproduzierbar durchführen lässt.

Gemäß dem Stand der Technik wurde bisher meist gepulst bestrahlt, wobei bisher eine Wartezeit nach einem jeweiligen Neutronenpuls erforderlich war. Die Pulslänge lag bisher üblicherweise im Bereich von zehn bis mehreren hundert Mikrosekunden ($\mu$Sek.). Im Gegensatz zu gepulster Bestrahlung wird simultan zur Bestrahlung sowohl die von der Probe ausgesendete/emittierte prompte als auch die verzögerte Gammastrahlung gemessen, wobei die Energieauflösung des Detektors die Unterteilung in prompte und verzögerte Gammastrahlung ermöglicht. Im Gegensatz zu gepulster Bestrahlung muss kein Zeitfenster (bisher üblicherweise mindestens 5$\mu$Sek.) eingehalten werden, bis die Messung/Auswertung emittierter Strahlung erfolgen kann. Es ist keine Wartezeit für den Beginn der Detektion der Gammastrahlung notwendig. Eine zeitliche Koordination mit dem Ende von einem jeweiligen Neutronenpuls ist nicht mehr erforderlich, sondern es kann kontinuierlich bestrahlt und gemessen werden. Dies ermöglicht auch, die Messzeit für die Analyse der Proben zu reduzieren.

Das Messen kann vollständig ohne Zeitfenster erfolgen, oder wahlweise teilweise mit Zeitfenster. Bevorzugt wird zumindest ein Teil der emittierten Gammastrahlung jedenfalls zeitunabhängig ohne Zeitfenster gemessen. Das Verfahren umfasst ein Moderieren der schnellen Neutronen, zumindest zeitweise.

Das simultane Messen der Gammastrahlung erlaubt eine hohe Leistungsfähigkeit der Messanlage. In einem Standard-Betriebsmodus kann dabei sowohl prompte als auch verzögerte Gammastrahlung gemessen werden, mit einem Schwerpunkt hinsichtlich prompter Gammastrahlung. Das Messen simultan zur Bestrahlung kann auf kontinuierliche Weise erfolgen, insbesondere bei derselben zeitlichen Vorgabe wie das Bestrahlen, oder in einzelnen Zeitfenstern unabhängig von zeitlichen Vorgaben für das Bestrahlen. Beispielsweise erfolgt ein kontinuierliches Bestrahlen, aber optional ein Messen nur in kleinen Intervallen. Das Messen simultan zu einer kontinuierlichen Bestrahlung hat zur Folge, dass irgendwelche Zeitfenster nicht berücksichtigt werden müssen, sondern dass das Messen und Auswerten auf sehr flexible Art und Weise durchgeführt werden kann und beide Arten von Strahlung, also prompte und verzögerte Gammastrahlung, ausgewertet werden können. Als Besonderheit der vorliegenden Erfindung kann die Messung/Detektion der Gammastrahlung unabhängig von zeitlichen Zusammenhängen bei der Neutronenbestrahlung hervorgehoben werden.

Gemäß dem Stand der Technik wurde gepulst bestrahlt, wobei bisher eine Wartezeit nach einem jeweiligen Neutronenpuls erforderlich war. Die Pulslänge lag bisher üblicherweise im Bereich von zehn bis mehreren hundert Mikrosekunden ($\mu$Sek.). Unmittelbar nach einem jeweiligen Neutronenpuls war das Untergrundsignal der bisher verwendeten Messanlagen zu hoch, so dass das Signal zu Untergrund-Verhältnis (signal to noise ratio SNR) direkt nach dem Neutronenpuls zu schlecht war, um die Messung auswerten zu können. Daher konnte kein aussagekräftiges Spektrum der Gammastrahlung detektiert werden. Bei bisherigen Verfahren musste den Neutronen ein gewisses Zeitfenster gewährt werden, um die Messung vornehmen zu können, insbesondere nachdem die Neutronen emittiert wurden. Üblicherweise beträgt dieses Zeitfenster mindestens 5$\mu$Sek. In diesem Zeitfenster steigt die Wahrscheinlichkeit für Wechselwirkungen in der Probe, so dass nach einer gewissen Wartezeit (bzw. Moderationszeit) nach einem jeweiligen Neutronenpuls mit einem ausreichend guten Signal zu Untergrund-Verhältnis SNR gemessen werden konnte. Die Datenakquise erfolgte auf zeitversetzte Weise in Abhängigkeit der Neutronenpulse.

Bei der gemäß vorliegendem Verfahren gemessenen und ausgewerteten Gammastrahlung handelt es sich hingegen einerseits um prompte Gammastrahlung, die unmittelbar nach einer Wechselwirkung der Neutronen mit den Atomkernen der Probe emittiert wird. Der Zeitraum bis zur Emission beträgt bei prompter Gammastrahlung ca. 10exp-16 bis 10exp-12 Sekunden, welcher Zeitraum derart gering ist, dass von instantaner/unmittelbarer Emission gesprochen werden kann. Bei prompter Gammastrahlung gibt es keinen messtechnisch relevanten Zeitverzug zwischen Neutroneneinfang und Emission der Gammastrahlung. Andererseits ist auch verzögerte Gammastrahlung betroffen, die beim Zerfall der aktivierten Atomkerne zeitversetzt gemäß der charakteristischen Halbwertszeit emittiert wird. Verzögerte Gammastrahlung wird zeitversetzt nach einem Neutroneneinfang gemäß der charakteristischen Halbwertszeit des gebildeten Radionuklids aus dem Atomkern emittiert. Bei der klassischen Neutronenaktivierungsanalyse (NAA) haben der Wirkungsquerschnitt für den Neutroneneinfang sowie die Halbwertzeit des aktivierten Radionuklids Einfluss auf die emittierte Strahlung. Erfindungsgemäß können zwei Messkonzepte miteinander verbunden werden: klassische Neutronenaktivierungsanalyse (NAA) einerseits, und eine Prompt-Gamma-NAA andererseits (PGNAA). Dabei kann basierend auf der Energie der Gammastrahlung (insbesondere Position des Maximums eines Peaks) und der energetischen Auflösung des Detektors zwischen prompter und verzögerter Gammastrahlung unterschieden werden.

Erwartungsgemäß kann der größte Erkenntnisgewinn durch Auswertung von prompter Gammastrahlung erzielt werden. Es gibt jedoch eine ganze Reihe von Elementen, wie z.B. Blei, die kein gutes promptes Signal liefern. Daher ist es bei zahlreichen Anwendungsfällen oder zahlreichen Arten von Materialproben zweckdienlich, die Auswertung sowohl von prompter als auch von verzögerter Gammastrahlung vorzunehmen. Wahlweise kann die Bestrahlung zusätzlich optional auch in gepulster Art und Weise erfolgen, zumindest zeitweise, um lediglich verzögerte Gammastrahlung zu messen. Wahlweise kann zusätzlich unabhängig von der Art und Weise der Bestrahlung lediglich verzögerte Gammastrahlung gemessen werden, insbesondere bei einer Analyse hinsichtlich Blei.

Die aus der Probe emittierte Gammastrahlung wird in einem oder mehreren Detektoren energieaufgelöst gemessen. Hieraus resultiert ein gemessenes Gammaspektrum, insbesondere entsprechend einer Aufzeichnung der Zahl der in einem Gammastrahlen-Detektor nachgewiesenen Ereignisse als Funktion der Energie. Anhand der Energie der Gammastrahlung erfolgt die Identifizierung der Elemente der Probe. Mittels der gemessenen energieabhängigen Strahlungsintensität erfolgt die Quantifizierung einer Elementmasse. Der Massenanteil von einem Element, das in der Probe enthalten ist, wird nach Abzug des Untergrundsignals aus der Fläche der Photopeaks ausgewertet, welche das Element im Gammaspektrum hervorruft. Da die bestrahlten Elemente in der Probe im Regelfall Gammastrahlung bei verschiedenen Energien emittieren, werden sämtliche auswertbaren Gamma-Energien von einem Element bei der analytischen Auswertung für die Massenbestimmung sowie bei der Unsicherheitsanalyse für die Massenbestimmung berücksichtigt. Es hat sich gezeigt, dass die Analyse basierend auf sämtlichen auswertbaren Gamma-Energien von einem Element den Vorteil hat, dass eine breite Datengrundlage genutzt werden kann und dass Plausibilitätsprüfungen durchgeführt werden können. Ferner kann eine noch verbleibende Messunsicherheit reduziert werden, und die Genauigkeit des Messverfahrens kann gesteigert werden.

Die analytische Auswertung zur Massenbestimmung bei der Multielementanalyse basiert insbesondere auf der Berechnung von energieabhängigen Photopeak-Effizienzen von Gamma-Emissionen aus der Probe und aus einzelnen Partitionen der Probe sowie der Berechnung des Neutronenspektrums und des Neutronenflusses innerhalb der Probe und innerhalb von Partitionen der Probe. Für diese Berechnungen können initial Annahmen über die elementare Zusammensetzung getroffen werden, welche aus der Auswertung des Gammaspektrums abgeleitet werden. Es hat sich gezeigt, dass die Ergebnisse der Multielementanalyse die a priori gemachten initialen Annahmen zur Berechnung von Photopeak-Effizienzen, Neutronenspektrum und Neutronenfluss präzisieren und auch die Genauigkeit des Messverfahrens erhöhen können, so dass das Verfahren bevorzugt iterativ bezüglich der Zusammensetzung der Probe so lange durchgeführt wird, bis sich die berechnete Zusammensetzung der Probe stabilisiert. Das zerstörungsfreie Verfahren zur Multielementanalyse basierend auf Neutronenaktivierung ist durch diese Art der analytischen Verfahrensweise auf automatische Weise möglich, insbesondere iterativ, wobei als Eingangsparameter insbesondere nur die Form des Probekörpers und die Masse sowie die Neutronenquellstärke erforderlich sind. Die Neutronenquellstärke kann dabei von der Messanlage bzw. Vorrichtung als Regelgröße bezogen werden.

Anhand dieses Verfahrens zur Multielementanalyse basierend auf Neutronenaktivierung sowie einer Vorrichtung zur Durchführung des Verfahrens können zerstörungsfrei diverse Proben auf einfache Art und Weise bezüglich der stofflichen Zusammensetzung untersucht werden. Als analysierbare Proben können beispielhaft genannt werden: Bodenproben, Aschen, Wasserproben, Klärschlämme, Elektroschrotte, chemotoxische oder radioaktive Abfälle. Die Analyse von Proben kann im Batchbetrieb oder online an einem Massenstrom erfolgen. Die Analyse von Proben kann unter anderem für Zwecke der Qualitätssicherung, der zielgerichteten Sortierung, der Prozesssteuerung und/oder der Nachweisführung erfolgen.

Im Vergleich zu bisherigen Verfahren zeichnet sich das erfindungsgemäße Verfahren insbesondere durch folgende Eigenschaften aus: Kontinuierliche Emission von schnellen Neutronen; Kontinuierliche Messung der Gammaspektren; Kollimierte Messung der gesamten Probe oder von einzelnen Teilvolumina der Probe (Partitionen); die Probe wird insbesondere mit 2.45MeV Neutronen bestrahlt (< 10MeV, vergleichsweise kleine Startenergie); Gammastrahlung wird durch Auswertung des Signals einer jeden Partition ausgewertet; die analytische Auswertung zur Bestimmung der Elementmassen erfolgt insbesondere basierend auf der vereinfachten Annahme, dass die Elementmasse homogen in einer Partition verteilt ist; und/oder es erfolgt eine Rotation und axiale Verschiebung des Probekörpers zum Detektor. Nach bzw. während der Emission von schnellen Neutronen kann eine Moderation der schnellen Neutronen in einer Moderationskammer, in der Probenkammer und/oder in der Probe selbst erfolgen, bis diese ausreichend thermalisiert sind.

Im Gegensatz dazu erfolgte die Analyse bisher üblicherweise durch ein Verfahren mit den folgenden Eigenschaften: Gepulste Bestrahlung mit schnellen Neutronen; Messung der Gammaspektren in vorab definierten Zeitintervallen bzw. Zeitfenstern nach einem jeweiligen Neutronenpuls bzw. zwischen den einzelnen Neutronenpulsen; die Probe wird integral gemessen, ohne dass ein Kollimator definiert ist; die Probe wird insbesondere mit 14.1MeV Neutronen bestrahlt (>10MeV); es erfolgt eine Rotation des Probekörpers vor dem Detektor, und die Gammastrahlung wird in Abhängigkeit eines Drehwinkels der bestrahlten Probe gemessen; die analytische Auswertung zur Bestimmung von inhomogen verteilten Elementmassen erfolgt basierend auf der vereinfachten Annahme, dass die Elementmasse punktförmig ist. Der integrale Neutronenfluss in der Probe kann mittels einer metallischen Umhüllung der Probe bestimmt werden.

Im Folgenden wird kurz auf die im Zusammenhang mit der vorliegenden Erfindung verwendeten Begriffe eingegangen.

Als Abschirmung ist bevorzugt ein Material bzw. eine Einheit zu verstehen, welche/welches die Vorrichtung bzw. Messanlage umschließt und die Gamma- und Neutronenortsdosisleistung außerhalb der Messanlage reduziert. Als Bestrahlung bzw. Bestrahlen ist bevorzugt ein Betrieb eines Neutronengenerators und ein Generieren und Ausstrahlen von Neutronen auf wenigstens eine Probe zu verstehen, um die Emission von für die Elementzusammensetzung charakteristischer Gammastrahlung aus der Probe zu bewirken.

Als Detektoreinheit ist bevorzugt eine Einheit oder Baugruppe der Messanlage zu verstehen, umfassend einen oder mehrere Detektoren, mit welcher Detektoreinheit die aus der Probe oder aus einzelnen Partitionen der Probe emittierte Gammastrahlung hochauflösend gemessen wird. Ein jeweiliger Detektor kann eine Erstreckung von z.B. 5 bis 10cm in einer Raumrichtung aufweisen.

Als Kollimator ist bevorzugt eine Einheit oder Baugruppe der Messanlage zu verstehen, welche den Sichtbereich eines Detektors auf einen Raumbereich mit einer höheren Nachweiswahrscheinlichkeit für Gammastrahlung einschränkt. Die Kollimation kann auch speziell hinsichtlich einzelner Segmente/Partitionen der Probe erfolgen. Als Messanlage ist bevorzugt eine messtechnische Anlage zur Erzeugung ionisierender Strahlung mit dem Zweck der Multielementanalyse von Proben zu verstehen. Die hier beschriebene Vorrichtung kann in einer Ausführungsform als Messanlage bezeichnet werden.

Als Moderationskammer ist bevorzugt eine Baugruppe der Messanlage zur Moderation von Neutronen zu verstehen, insbesondere mittels Graphit oder zumindest teilweise bestehend aus Graphit. Die Moderation kann je nach gewünschter Art und Weise einer Messung/Auswertung optional in der Probenkammer vorgesehen sein, und/oder in einer separaten Moderationskammer erfolgen.

Als Neutronengenerator ist bevorzugt eine Baugruppe der Messanlage zu verstehen, welche schnelle Neutronen aussendet (insbesondere 2.45MeV-Neutronen oder ferner auch allgemein Neutronen mit <10MeV) und innerhalb der Abschirmung angeordnet ist. Der Neutronengenerator kann optional von einer separat von der Probenkammer bereitgestellten Moderationskammer umgeben sein.

Als Neutronenfluss ist bevorzugt ein Produkt aus der Neutronendichte (freie Neutronen pro cm3) und dem mittleren Betrag der Geschwindigkeit der Neutronen (cm/Sek.) zu verstehen.

Als Neutronenspektrum ist bevorzugt die relative Verteilung der Neutronenenergie über den gesamten Energiebereich der Neutronen zu verstehen.

Als Partition ist bevorzugt ein vordefinierbarer/vordefinierter Raumbereich innerhalb der Probe zu verstehen, wobei die Summe sämtlicher Partitionen die gesamte Probe ergibt bzw. den gesamten Probenkörper definiert.

Eine bevorzugte Anzahl von Partitionen kann in Abhängigkeit von der Größe der Probe und der messtechnischen Aufgabenstellung gewählt werden, beispielsweise zwischen 1 und 60 Partitionen. Dabei kann das Volumen einer Partition im Bereich von wenigen Kubikzentimetern bis Litern liegen. Bei besonders kleinen Proben, z.B. wenigen Kubikzentimetern, kann es vorteilhaft sein, nur eine einzige Partition zu definieren.

Als Photopeak-Effizienz ist bevorzugt eine Nachweiswahrscheinlichkeit für die vollständige Energiedeposition einer Gamma-Emission im Detektor zu verstehen.

Als Gamma-Emission kann dabei Gammastrahlung unabhängig von deren Energieniveau verstanden werden. Spezifische Gammastrahlung weist eine spezifische Energie auf. Die Gamma-Emission als solche ist die Reaktion nach einer Bestrahlung mit Neutronen. Die Analyse wird daher spezifisch bezüglich einzelner Arten von Gammastrahlung aus dem Spektrum einer Gamma-Emission durchgeführt. Über das Spektrum der Gamma-Emission werden Signale von prompter und verzögerter Gammastrahlung detektiert.

Als Probe ist bevorzugt eine feste oder flüssige Materialmenge zu verstehen, welche für die Analyse ausgewählt wird und den Untersuchungsgegenstand darstellt, z.B. umfassend Bodenproben, Aschen, Wasserproben, Klärschlämme, chemotoxische oder radioaktive Abfälle.

Als Probenkammer ist bevorzugt eine Baugruppe der Messanlage zu verstehen, in welcher die Probe während der Bestrahlung angeordnet wird, und in welcher die Probe optional auch verlagert werden kann, insbesondere während der Bestrahlung.

Als Probenträger ist bevorzugt eine Baugruppe der Messanlage zu verstehen, welche die Probe aufnimmt und welche in der Probenkammer angeordnet ist. Mittels des Probenträgers kann eine örtliche Verlagerung der Probe erfolgen.

Im Folgenden wird das erfindungsgemäße Verfahren zunächst allgemein beschrieben, wobei darauffolgend im Detail auf einzelne Aspekte des Verfahrens eingegangen wird.

Durch den Betrieb eines oder mehrerer Neutronengeneratoren wird eine Probe innerhalb einer Messanlage kontinuierlich mit Neutronen bestrahlt und simultan zur Bestrahlung die durch die Neutronenwechselwirkungen induzierte/emittierte Gammastrahlung gemessen.

Wie bereits erwähnt, handelt es sich bei der Gammastrahlung einerseits um prompte Gammastrahlung, die unmittelbar nach einer Wechselwirkung der Neutronen mit den Atomkernen der Probe emittiert werden, und andererseits um verzögerte Gammastrahlung, die beim Zerfall der aktivierten Atomkerne gemäß der charakteristischen Halbwertszeit emittiert wird. Die aus der Probe emittierte Gammastrahlung kann in einem oder mehreren Detektoren energieaufgelöst gemessen werden. Hieraus resultiert ein gemessenes Gammaspektrum, pro Detektor. Das Gammaspektrum ist die Aufzeichnung der Zahl der in einem Gamma-Detektor nachgewiesenen Ereignisse als Funktion der Energie. Anhand der Energie der Gammastrahlung erfolgt die Identifizierung der Elemente der Probe. Mittels der gemessenen energieabhängigen Strahlungsintensität kann die Quantifizierung einer Elementmasse erfolgen.

Berechnung der Elementmassen bei partitionierter und bei nicht-partitionierter Messung

Der Massenanteil von einem Element, das in der Probe enthalten ist, wird nach Abzug des Untergrundsignals aus der Fläche der Photopeaks berechnet, den das Element im Gammaspektrum hervorruft. Die bei der Multielementanalyse registrierte Netto-Photopeakzählrate ist von folgenden Einflussparametern abhängig, welcher Zusammenhang insbesondere in der folgenden Veröffentlichung betrachtet wurde: G. L. Molnar (Ed.), Handbook of Prompt Gamma Activation Analysis with Neutron Beams, Kluwer Academic Publishers, ISBN 1-4020-1304-3 (2004).

$$(1) \qquad (P_R)_{E_\gamma} = \frac{N_A}{M} \cdot \int_V \int_0^\infty m(\underline{x}) \cdot \varepsilon_{E_\gamma}(\underline{x}) \cdot \sigma_\gamma(E_n) \cdot \Phi(\underline{x}, E_n) \, dE_n \, d\underline{x}$$

wobei

- $(P_R)_{E_\gamma}$ die Netto-Zählrate des Photopeaks des Elementes für die Gamma-Energie $E_\gamma$ ist,
- $M$ die molare Masse des entsprechenden Elementes ist,
- $N_A$ = 6.0221408 . $10^{23}$ die Avogadro Konstante ist,
- $x$ die Position in dem Probevolumen $V$ ist,
- $E_n$ die Neutronenenergie ist,
- $m(\underline{x})$ die Verteilungsfunktion für die Masse des entsprechenden Elementes im Probevolumen ist,
- $\varepsilon E_\gamma(\underline{x})$ die Photopeak-Effizienz für Gammastrahlen des Elementes an der entsprechenden Energie $E_\gamma$ die an der Position $\underline{x}$ emittiert worden ist,
- $\sigma_\gamma(E_n)$ der partielle Gamma-Produktions-Wirkungsquerschnitt ist, und
- $\Phi(\underline{x}, E_n)$ der Neutronenfluss als Funktion der Position und Energie in der Probe ist.

Dabei ist der partielle Gamma-Produktions-Wirkungsquerschnitt abhängig vom betrachteten Element. Da die bestrahlten Elemente in der Probe im Regelfall Gammastrahlung bei verschiedenen Energien emittieren, werden sämtliche auswertbaren Gamma-Energien $E_\gamma$ von einem Element bei der analytischen Auswertung für die Massenbestimmung sowie der Unsicherheitsanalyse auf der Massenbestimmung berücksichtigt. Die Berücksichtigung von mehreren Gamma-Energien von einem Element reduziert die Unsicherheit des Messverfahrens.

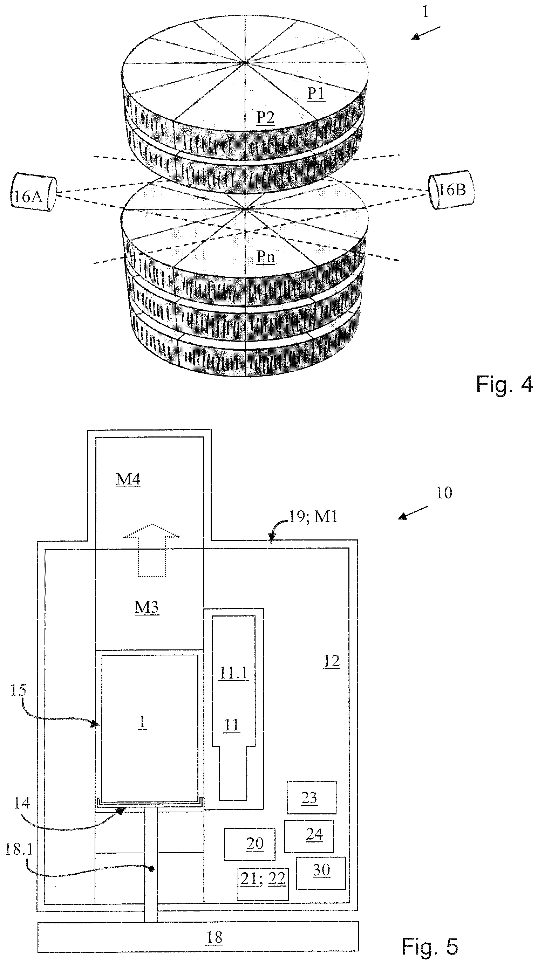

Bevorzugt wird die Probe in Partitionen unterteilt und segmentiert gemessen/analysiert. Hierzu befinden sich bei einer einzelnen gammaspektrometrischen Messung eine oder mehrere Partitionen der Probe im kollimierten Sichtbereich des Detektors (Fig. 4). Der Sichtbereich des Detektors ist der Raumbereich, welcher aufgrund der Kollimatorgeometrie eine erhöhte Nachweiswahrscheinlichkeit von Gammastrahlung aufweist. Damit die jeweiligen Partitionen optimal zum Sichtbereich des Detektors ausgerichtet werden können, kann die Probe vor dem Detektor bewegt werden, insbesondere rotiert und verschoben werden. Die energieabhängigen Nachweiswahrscheinlichkeiten von emittierter Gammastrahlung aus der Probe bzw. aus einer jeweiligen Partition werden als Photopeak-Effizienzen bezeichnet. Innerhalb der Partitionen der Probe wird die Gammastrahlung abgeschwächt, so dass Partitionen, welche dem Detektor zugewandt sind und sich im Sichtbereich des Kollimators befinden, höhere Photopeak-Effizienzen aufweisen als Partitionen außerhalb des Sichtbereichs des Detektors. Somit kann die Belastbarkeit eines Messergebnisses bezüglich der Elementzusammensetzung einer jeweiligen Partition erhöht werden, insbesondere dann, wenn mehrere gammaspektrometrische Messungen berücksichtigt werden.

Durch die Kollimation auf eine Partition kann insbesondere das SNR für die jeweilige Partition verbessert werden. Werden gammaspektrometrische Messungen mehrerer Partitionen kombiniert ausgewertet, kann eine etwaig verbleibende Unsicherheit reduziert werden.

Es hat sich gezeigt, dass sich besondere Vorteile ab einer Anzahl von vier Partitionen ergeben, in Abhängigkeit von der Größe des Probenkörpers. Die Geometrie der Partition wird dabei bevorzugt in Abhängigkeit von der Geometrie des Probenkörpers und der messtechnischen Aufgabenstellung definiert.

Die Probe wird bei zylindrischen Proben insbesondere gemäß Layern und Sektoren in Partitionen eingeteilt (Fig. 4). Insbesondere werden Partitionen in der Art von Kuchenstücken generiert, also als dreidimensionale Zylindersegmente. Eine horizontale Partitionierung (insbesondere gemäß Schnitten orthogonal zu einer Symmetrieachse einer zylindrischen Probe) wird als Layer bezeichnet, und eine winkelabhängige Partitionierung wird als (Winkel-)Sektor bezeichnet. Bei einer zusätzlichen Aufteilung von Winkelsektoren in Abhängigkeit des Abstands von der Symmetrieachse werden diese Partitionen spezifisch als Radialsektor bezeichnet. Eine kubische oder quaderförmige Probe kann insbesondere in einzelne Voxel unterteilt. Jedes Voxel stellt eine Partition dar. Das jeweilige Voxel weist ebenfalls eine kubische oder quaderförmige Geometrie auf.

Die Bestimmung der Elementmassen in den einzelnen Partitionen geschieht auf die folgende Art und Weise. Dabei wird insbesondere die Annahme zugrunde gelegt, dass innerhalb einer Partition die Masse eines Elementes $mk$ homogen verteilt ist. Bei $N$ Partitionen werden somit $N$ Gammaspektren aufgenommen und es ergeben sich für jede Gamma-Energie $N$ Netto-Photopeakzählraten. Je nach Art der Partitionen können sich Varianten ergeben, insbesondere bei Radialsektoren. Dann kann $N$ durch $K$ ersetzt werden, und es gilt beispielsweise: Bei $K$ Partitionen werden $N$ Gammaspektren aufgenommen in $N$ Messungen, wobei $K$ größer oder gleich $N$ ist, und es ergeben sich für jede Gamma-Energie $N$ Netto-Photopeakzählraten. Gleichung (1) kann nun, für $K$ oder $N$ Partitionen, für eine Gamma-Energie bei kollimierter Messung der Partition $i$ auf die folgende Summe reduziert werden, wobei der Index $K$ die Partitionen durchläuft, was eine einfache, robuste Analyse verspricht:

$$(2) \qquad (P_R)^i_{E_\gamma} = \frac{N_A}{M} \cdot \sum_{k=1}^{N} m_k \cdot \varepsilon^{i\leftarrow k}_{E_\gamma} \cdot \sigma^{ik}_{E_\gamma} \cdot \Phi^i_k$$

wobei

- $\varepsilon^{i\leftarrow k}_{E_\gamma}$ die integrale Photopeak-Effizienz der Partition $k$ in der Messung $i$ ist,

- $\sigma^{ik}_{E_\gamma}$ der integrale $(n,\gamma)$ - Wirkungsquerschnitt für die Gamma-Energie in Partition $k$ bei der Messung $i$ ist, gebildet durch

$$\sigma^{ik}_{E_\gamma} = \frac{\int_0^\infty \sigma_\gamma(E_n) \cdot \Phi^i_k(E_n)\, dE_n}{\int_0^\infty \Phi^i_k(E_n)\, dE_n}$$

- $\Phi^i_k$ der integrale Neutronenfluss in Partition $k$ l

bei der Messung $i$ ist, gebildet durch

$$\Phi^i_k = \int_0^\infty \Phi^i_k(E_n)\, dE_n$$

Somit ergibt sich aus Gleichung (2) ein lineares Gleichungssystem der Dimension $N \times N$ bzw. $NxK$, welches nach den Elementmassen der einzelnen Partitionen gelöst werden kann. Dieses lineare Gleichungssystem hat die Form:

$$(3) \qquad A \cdot m = b$$

wobei $A$ eine Matrix der Dimension $N \times N$ bzw. $NxK$ ist und m, $b$ Vektoren der Dimension $N \times 1$ bzw. $Kx1$ sind. Die Einträge der Matrix $A$ sind gegeben durch

$$A_{ik} = \frac{N_A}{M} \cdot \varepsilon_{E_\gamma}^{i \leftarrow k} \cdot \sigma_{E_\gamma}^{ik} \cdot \Phi_k^i$$

Die Einträge von m sind gegeben durch *mi,* und die Einträge von *b* sind gegeben durch

$$b_i = (P_R)_{E_\gamma}^i$$

Insbesondere um nur physikalisch sinnvolle, positive und eindeutige Ergebnisse bei der Lösung des Gleichungssystems zu erhalten, kann bei der numerischen Lösung des Gleichungssystems ein so genanntes "nicht negative kleinste Quadrate"-Verfahren angewendet werden.

Können für einen Anwendungsfall vereinfachende Annahmen bezüglich der Homogenität der Massenverteilung, der Neutronenflussverteilung und/oder der Photopeak-Effizienzen in der gesamten Probe getroffen werden, insbesondere basierend auf einem Parameter für die Größe und Zusammensetzung der Probe, so ist eine segmentierte/partitionierte Messung nicht unbedingt erforderlich. Es hat sich gezeigt, dass die Probe dann in einer einzigen, bevorzugt kollimierten Messung gemessen werden kann, und es kann ein einziges Gammaspektrum aufgenommen werden. Gleichung (2) reduziert sich dann zu folgendem einfachen linearen Zusammenhang:

$$(4) \qquad\qquad (P_R)_{E_\gamma} = \frac{m \cdot \varepsilon_{E_\gamma} \cdot N_A \cdot \sigma_{E_\gamma} \cdot \Phi}{M}$$

wobei

- $\varepsilon E_\gamma$ die integrale Photopeak-Effizienz der Probe ist,
- $\sigma E_\gamma$ der integrale $(n, \gamma)$ -Wirkungsquerschnitt für die Gamma-Energie in der Probe ist,
- $\Phi$ der integrale Neutronenfluss in der Probe ist.

Diese Gleichung kann direkt nach der Elementmasse m gelöst werden. Die entsprechenden Parameter können für den segmentierten/partitionierten als auch für den nicht-segmentierten Fall auf dieselbe Weise berechnet werden.

Pro Gamma-Energie wird eine Masse m des entsprechenden Elementes berechnet, sei es in einer Partition oder sei es im gesamten Probevolumen. Die Messunsicherheit *u(m)* auf diesem Wert wird gemäß der DIN ISO 11929 bestimmt, was auch folgender vom Deutschen Institut für Normung herausgegebenen Veröffentlichung entnommen werden kann: Bestimmung der charakteristischen Grenzen (Erkennungsgrenze, Nachweisgrenze und Grenzen des Vertrauensbereiches) bei Messungen ionisierender Strahlung - Grundlagen und Anwendungen (ISO 11929:2010) (2011).

Da ein Element Gammastrahlung mit unterschiedlichen Gamma-Energien emittiert, wird als Messergebnis die Masse des Elementes als gewichteter Mittelwert der einzelnen bestimmten Massen berechnet. Die Gewichtung geschieht anhand der berechneten Unsicherheiten.

Automatische Identifizierung der in der Probe enthaltenen Elemente

Die in der Probe enthaltenen Elemente können auf Grundlage der aufgenommenen Gammaspektren automatisch identifiziert werden. Für jedes Element kann eine charakteristische Emissionssignatur der Gamma-Energien mit entsprechenden Intensitäten aus einer kernphysikalischen Datenbank erstellt werden. Die Signale an den bekannten Gamma-Energien der Elemente im Spektrum werden mittels eines Computerprogrammes mit dieser Signatur abgeglichen. Eine statistische Analyse des Grades der Übereinstimmung liefert eine Liste der mit größter Wahrscheinlichkeit in der Probe enthaltenen Elemente. Für diese Identifizierung wird nicht nur auf die Gamma-Energien der prompten Gammastrahlung, sondern auch der verzögerten Gammastrahlung zurückgegriffen. Hierdurch ergibt sich insbesondere der Vorteil, dass das Verfahren für eine Vielzahl von Elementen anwendbar ist.

Verfahren zur Bestimmung der Photopeak-Effizienzen

Die Bestimmung der energieabhängigen Photopeak-Effizienzen eines Elements geschieht mittels der Annahme einer homogenen Element- und Massenverteilung in einer Partition der Probe bzw. der gesamten Probe. Die mittlere Dichte einer Partition der Probe kann durch die Masse der Probe dividiert durch das Probenvolumen und/oder durch eine Transmissionsmessung mit Hilfe eines Gamma-Strahlers, wie z.B. Co-60 oder Eu-154 bestimmt werden. Die Transmissionsmessung kann als erweiterte Messung zum Charakterisieren der Probe dienen, beispielsweise um die Füllhöhe eines zu untersuchenden Fluids oder einer Schüttung in einem Fass (Probe) bestimmen zu können. Für die Berechnung der Photopeak-Effizienzen werden mittels eines Computerprogrammes zufällig Punkte im Probenvolumen erzeugt und im nächsten Schritt eine große Anzahl zufälliger Trajektorien von diesem Punkt aus in Richtung des Detektors generiert. Entlang einer einzelnen Trajektorie werden dann die Weglängen in den unterschiedlichen Materialien bestimmt und aus den Abschwächungskoeffizienten der Materialien die energieabhängigen Wahrscheinlichkeiten einer Absorption und Streuung entlang der Trajektorie berechnet. Aus der Wegstrecke im Detektor und der energieabhängigen Wirkungsquerschnitte für die photoelektrische Reaktion, die Paarbildung und die Compton-Streuung wird eine energieabhängige Wahrscheinlichkeit für die vollständige Deposition der Gamma-Energie im Detektor berechnet. Beide Wahrscheinlichkeiten werden kombiniert, um die Wahrscheinlichkeit der Detektion eines Photons entlang der Trajektorie für jede mögliche Gamma-Energie zu erhalten. Eine Mittelung über alle Trajektorien mit demselben Ausgangspunkt ergibt die energieabhängige Photopeak-Effizienz für diesen Ausgangspunkt. Die Ergebnisse aller energieabhängigen Photopeak-Effizienzen der Ausgangspunkte in einer Partition werden gemittelt, um die entsprechende integrale Photopeak-Effizienz dieser Partition für jede Gamma-Energie zu erhalten.

Verfahren zur Bestimmung von Neutronenfluss und -spektrum

Für die analytische Auswertung zur Bestimmung der Elementmassen der Probe wird neben den energieabhängigen Photopeak-Effizienzen der Gamma-Emissionen der Neutronenfluss und das energieaufgelöste Neutronenspektrum innerhalb der Probe bzw. der einzelnen Partitionen der Probe durch ein analytisches Verfahren bestimmt. Dabei wird eine Diffusionsapproximation der linearen Boltzmann-Gleichung numerisch gelöst. Die Eingangsparameter für dieses System von Gleichungen werden aus Simulationsrechnungen des Neutronenflusses und des Neutronenspektrums in der leeren Probenkammer berechnet.

Üblicherweise wurde bisher der Neutronenfluss in der Probe bestimmt, indem energieabhängige Korrekturfaktoren integral für die gesamte Probe bestimmt wurden. Diese Art und Weise der Berechnung wurde insbesondere in der folgenden Veröffentlichung betrachtet: A. Trkov, G. Zerovnik, L. Snoj, and M. Ravnik: On the self-shielding factors in neutron activation analysis, Nuclear Instruments and Methods in Physics Research A, 610, pp. 553 - 565 (2009). Für großvolumige Proben wurde in der weiter unten im Detail genannten Veröffentlichung von R. Overwater aus dem Jahre 1994 ein approximatives Verfahren zur Bestimmung des Neutronenflusses ohne Energieabhängigkeit vorgeschlagen, insbesondere für spezielle Geometrien, die eine Reduktion auf zwei Raumdimensionen erlauben.

Der Neutronenfluss und das Neutronenspektrum innerhalb der Probe bzw. innerhalb einzelner Partitionen der Probe können in dem hier beschriebenen Verfahren automatisiert (durch ein Computerprogramm) bestimmt werden, wobei eine Diffusionsapproximation der linearen Boltzmann-Gleichung orts- und energieaufgelöst (bei Berücksichtigung aller drei Raumdimensionen) numerisch gelöst werden kann und die Eingangsparameter für dieses System von Gleichungen aus Simulationsrechnungen des Neutronenflusses und des Neutronenspektrums in der leeren Probenkammer berechnet werden können.

Der orts- und energieaufgelöste Neutronenfluss in der Probe lässt sich aus der Lösung der vollen Boltzmann-Transportgleichung für die Neutronen bestimmen:

$$(5) \qquad \Phi(\underline{x}, E_n) = \int_{S^2} \Psi(\underline{x}, E_n, \Omega) \, d\Omega$$

wobei $\Omega$ die Richtungsvariable bezeichnet und $\Psi$ somit der folgenden Gleichung genügt:

$$(6) \quad \Omega \cdot \nabla_x \Psi(\underline{x}, E_n, \Omega) + \Sigma_t(\underline{x}, E_n)\Psi(\underline{x}, E_n, \Omega) = \int_{S^2} \int_0^\infty \Sigma_s(\underline{x}, E_n', E_n, \Omega', \Omega)\Psi(\underline{x}, E_n', \Omega') \, dE_n' \, d\Omega'$$

Dabei bezeichnet $\Sigma t$ den totalen und $\Sigma s$ den Streuwirkungsquerschnitt für Neutronen des Probenmaterials, die sich aus den einzelnen Wirkungsquerschnitten der in der Probe enthaltenen Elemente zusammensetzen.

Gleichung (6) wird durch ein gekoppeltes System von Diffusionsgleichungen approximiert, entsprechend der so genannten SP3-Approximation, welcher Zusammenhang insbesondere in der folgenden Veröffentlichung betrachtet wurde: P. S. Brantley and E. W. Larsen, The simplified P3 approximation, Nuclear Science and Engineering, 134, pp. 1-21 (2000). Dieses Gleichungssystem wird in Multigruppen-Form numerisch mittels eines Computerprogrammes gelöst. Als Ergebnis kann der integrale Neutronenfluss und das Neutronenspektrum in jeder Partition der Probe erhalten werden, aufgelöst in den entsprechenden Energiegruppen. Um die Eingangsparameter zu bestimmen, wird der energieaufgelöste Fluss durch die Randflächen der Probe auf Grundlage von Simulationsrechnungen des Neutronenflusses in der leeren Messkammer berechnet. Die Parameter des Gleichungssystems ergeben sich aus der elementaren Zusammensetzung der Probe, wobei im ersten Schritt die Eingangsparameter aus dem simulierten Neutronenfluss und dem Neutronenspektrum in der leeren Probenkammer berechnet werden, insbesondere unter einer Annahme bezüglich Homogenität der Probe und der Elementzusammensetzung der Probe bzw. der Partitionen. Das Berechnen und Auswerten des Neutronenflusses und -spektrums kann jeweils individuell für eine jeweilige Partition erfolgen, insbesondere indem die jeweilige Partition basierend auf einer virtuellen Unterteilung der Probe in Raumbereiche definiert wird.

Automatisierter iterativer Ansatz

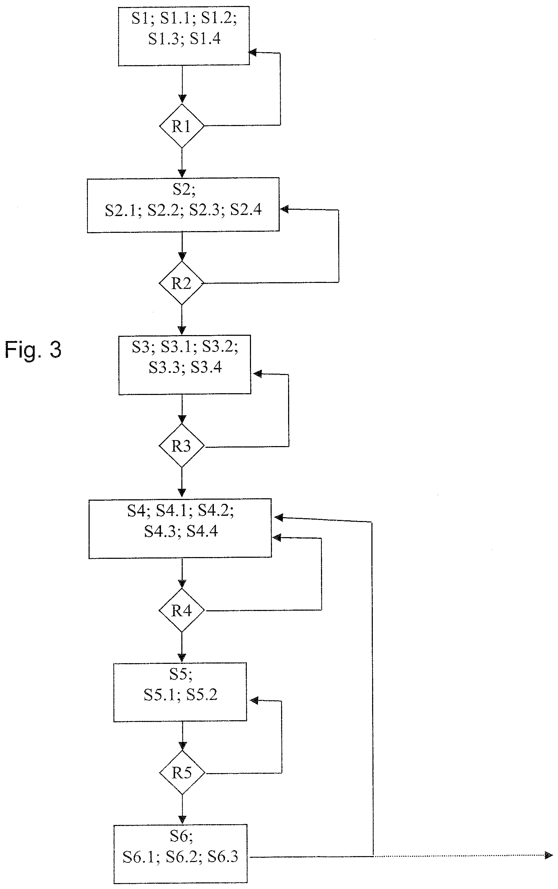

Das Ergebnis der analytischen Auswertung, oder das wichtigste Ergebnis, ist die Elementzusammensetzung der Probe. Der Auswertung werden bevorzugt Parameter bezüglich der energieabhängigen Photopeak-Effizienz, des Neutronenflusses und des Neutronenspektrums innerhalb der Probe bzw. innerhalb der Partitionen der Probe zugrunde gelegt. Basierend auf den drei Eingangsparametern Form/Geometrie und Masse des Probekörpers sowie Neutronenquellstärke kann somit unter Berücksichtigung der drei berechneten Parameter energieabhängige Photopeak-Effizienzen, Neutronenfluss und Neutronenspektrum innerhalb der Probe und innerhalb der Partitionen der Probe eine sehr umfassende Analyse erfolgen. Diese Parameter werden von der elementaren Zusammensetzung der Probe beeinflusst, so dass das Verfahren bevorzugt iterativ so lange durchgeführt wird, bis sich die berechnete Elementzusammensetzung nicht mehr bzw. nicht mehr wesentlich ändert. Unter Bezugnahme auf Fig. 3 wird eine mögliche Art und Weise der Iteration näher beschrieben. Aus den Eingangsparametern wird ein initialer Neutronenfluss und ein initiales Neutronenspektrum berechnet (Schritt S1). Ferner kann zusätzlich die genaue Art der Kollimation und wahlweise die Partitionierung der Probe berücksichtigt/bestimmt werden, und ferner auch eine für den Ablauf der Messung vorteilhafte Translation und/oder Rotation der Probe berücksichtigt werden (Schritt S2). Die Art der Kollimation sowie die Partitionierung der Probe kann insbesondere von der Größe und Geometrie der Probe abhängig gemacht werden. Größere Proben sowie komplexe Geometrien werden in mehr Partitionen unterteilt als kleine Proben. Die Auswertung des aufgenommenen Gammaspektrums umfasst die Identifizierung der in der Probe enthaltenen Elemente durch eine Zuordnung der gemessenen Peaks im Spektrum zu einzelnen Elementen, unter Berücksichtigung von Interferenzen zwischen Gammapeaks. Die Netto-Zählraten bei den einzelnen Gamma-Energien werden bevorzugt nur einmal berechnet und innerhalb des iterativen Verfahrens konstant gehalten (Schritt S3). Daraus wird eine initiale elementare Zusammensetzung der Probe berechnet. Unter Anwendung der im Folgenden noch beschriebenen Schritte zur Berechnung der Photopeak-Effizienzen (Schritt S4), der Elementmassen in den einzelnen Partitionen der Probe (Schritt S5) und des Neutronenflusses und des Neutronenspektrums (Schritt S6) wird die elementare Zusammensetzung der Probe bestimmt. Dieser Prozess wird solange iterativ durchlaufen, bis sich die Elementarzusammensetzung in den einzelnen Partitionen nicht mehr ändert. Durch die iterative analytische Verfahrensweise wird eine hohe Genauigkeit erzielt.

Die Netto-Zählraten an den einzelnen Gamma-Energien werden insbesondere nur einmal berechnet und während des iterativen Verfahrens konstant gehalten. Zu Beginn wird eine initiale Annahme über die elementare Zusammensetzung der Probe getroffen. Unter Anwendung der in den vorherigen Abschnitten beschriebenen Verfahren zur Berechnung der Photopeak-Effizienzen, des Neutronenflusses und des Neutronenspektrums und der Elementmassen in den einzelnen Partitionen der Probe wird dann eine neue elementare Zusammensetzung der Partition bestimmt. Dieser Prozess kann so lange iterativ durchlaufen werden, bis sich die Elementarzusammensetzung in den einzelnen Partitionen nicht mehr ändert.

Das hier beschriebene zerstörungsfreie Verfahren zur Multielementanalyse basierend auf Neutronenaktivierung ist durch diese analytische Verfahrensweise erstmals automatisch bzw. vollautomatisiert möglich, insbesondere auch über eine längere Dauer, insbesondere bei großvolumigen Proben, insbesondere bereits ab ca. 1 Liter. Als Eingangsparameter sind nur die Form des Probekörpers und die Masse erforderlich, wobei die Neutronenquellstärke bei der Berechnung Berücksichtigung findet. Die Neutronenquellstärke wird dabei aus den Betriebsparametern des Neutronengenerators bzw. aus der Aktivität der Neutronenquelle ermittelt. Auch für eine Elementanalyse von großvolumigen Proben wird die jeweilige Probe kontinuierlich mit Neutronen bestrahlt, und die von der Probe ausgesendete/emittierte Gammastrahlung sowie die Menge eines in der Probe enthaltenen Elements wird gemessen, und nach Abzug des Untergrundsignals aus der Fläche des Photopeaks ausgewertet, den das Element hervorruft, insbesondere in einer Zählrate-Energie-Darstellung. Im Gegensatz zu bisherigen Verfahren kann kontinuierlich bestrahlt und simultan gemessen werden, wobei keine gepulste Bestrahlung und auch keine Unterbrechungen der Messzeit notwendig sind. Auch ist es zur Bestimmung des Neutronenflusses am Ort der Probe nicht mehr erforderlich, dass für wenigstens einen Teilbereich der Probe die Zusammensetzung der Probe bekannt ist. Insbesondere für großvolumige Proben kann auch eine Transmissionsmessung zur Probencharakterisierung erfolgen.

Als schnelle Neutronen sind dabei Neutronen zu verstehen, die schnell sind, wenn sie aus der Quelle emittiert werden, und die daraufhin durch eine Probenkammer und/oder durch eine Moderationskammer verlangsamt werden, insbesondere um die Wahrscheinlichkeit einer Wechselwirkung mit der Probe erhöhen zu können. Mittels Moderatormaterialien verlangsamte Neutronen können als thermalisierte Neutronen bezeichnet werden. Thermalisierte Neutronen sind langsame bzw. abgebremste freie Neutronen, insbesondere mit einer kinetischen Energie von weniger als 100meV (Millielektronenvolt). In einer Klassifizierung für Neutronen liegen thermalisierte Neutronen bzw. thermische Neutronen zwischen den kalten und den schnellen Neutronen. Der Begriff "thermalisiert" weist darauf hin, dass die Neutronen durch wiederholte Streuung in einem Medium ins Gleichgewicht mit dessen Wärmebewegung kommen. Die Geschwindigkeiten dieser thermalisierten Neutronen nehmen dabei eine entsprechende Maxwell-Verteilung an, die durch eine Temperatur beschrieben werden kann.

Gemäß einer Ausführungsform erfolgt das Messen von in Reaktion auf die Bestrahlung emittierter Strahlung während des Bestrahlens in einem Zeitfenster von weniger als 5Mikrosekunden (μSek.).

Gemäß einer Ausführungsform erfolgt das Bestrahlen über einen Zeitraum von mindestens 10Min., oder mindestens 30Min., oder mindestens zwei Stunden, ohne Unterbrechung. Eine optimale Bestrahlungsdauer muss in Abhängigkeit der jeweils spezifischen Analyse-Aufgabe definiert werden. Das kontinuierliche Bestrahlen über derartige Zeiträume ermöglicht eine zuverlässige Auswertung der Messdaten auf flexible Weise, insbesondere auch gezielt hinsichtlich einzelner Teilaspekte. Die Bestrahlungsdauer kann insbesondere in Hinblick auf eine geforderte Sensitivität der Analyse-Aufgabe definiert werden. Es hat sich gezeigt, dass mit zunehmender Bestrahlungsdauer die Wahrscheinlichkeit steigt, Spurenverunreinigungen (Verunreinigungen im Spurenbereich) zu detektieren. Die Sensitivität des erfindungsgemäßen Messverfahrens lässt sich mit zunehmender Zeit steigern. Bestrahlungsdauer und Iteration können dabei unabhängig voneinander definiert werden.

Als minimale Bestrahlungsdauer kann eine Bestrahlungsdauer im Bereich von Sekunden definiert werden. Als maximale Bestrahlungsdauer kann eine Bestrahlungsdauer im Bereich von Sekunden, Minuten, Stunden oder sogar Tagen definiert werden.

Gemäß einer Ausführungsform werden Neutronen generiert mit dem Neutronenenergiewert 2.45MeV oder mit wenigstens einem Neutronenenergiewert aus der folgenden Gruppe: 2.45MeV, 14.1MeV. Es hat sich gezeigt, dass bei Neutronen mit 2.45MeV ein besonders gutes Signal erhalten werden kann, also ein Signal mit vorteilhaftem SNR. Gemäß einer Ausführungsform werden Neutronen generiert mit einer Neutronenenergie mit wenigstens einem Wert im Energiebereich 10keV bis 20MeV, insbesondere 10keV bis 10MeV. Gemäß einer Ausführungsform werden Neutronen generiert mit einer Neutronenenergie von maximal 10MeV. Dies liefert insbesondere eine hohe Sensitivität. Als ein Vorteil der kontinuierlichen Bestrahlung mit Neutronenenergien kleiner gleich 10MeV, insbesondere von Neutronenenergien 2.45MeV hat sich gezeigt, dass viele inelastische Wechselwirkungen als Schwellwertreaktionen mit erforderlichen Neutronenenergien von mindestens 3 bis 4MeV dann nicht auftreten. Solche inelastischen Wechselwirkungen verschlechtern das SNR. Indem nun die Energie der Neutronenquelle möglichst niedrig gehalten wird, können solche inelastischen Wechselwirkungen unterhalb der gewählten Neutronenenergie vermieden werden. Gemäß einer der möglichen Varianten des Verfahrens wird ausschließlich die Neutronenenergien 2.45MeV genutzt.

Erfindungsgemäß wird zum Bestimmen wenigstens eines Elements zumindest prompte oder sowohl prompte als auch verzögerte Gammastrahlung aus kontinuierlicher Neutronenbestrahlung gemessen und ausgewertet. Das Auswerten beider Arten von Gammastrahlung erweitert die Analysemöglichkeiten und erhöht die Flexibilität des Verfahrens. Es hat sich gezeigt, dass es zweckdienlich ist, folgende Reaktion eines bestrahlten Atomkerns auszuwerten, ohne dass eine Zeitabhängigkeit von irgendeinem Neutronenpuls berücksichtigt werden muss: Sobald ein Atomkern ein Neutron einfängt, wird automatisch Gammastrahlung bei verschiedenen Energien emittiert. Der Atomkern regt sich mittels der Aussendung einer Kaskade von Gamma-Emissionen ab. Die dadurch generierte Gammastrahlung ist charakteristisch für ein jeweiliges Element.

Gemäß einer Ausführungsform wird zum Bestimmen wenigstens eines Elements zumindest zeitweise ausschließlich verzögerte Gammastrahlung in Reaktion auf kontinuierliche Neutronenbestrahlung gemessen und ausgewertet. Dies ermöglicht, den Untersuchungsschwerpunkt auf bestimmte Aspekte zu fokussieren, z.B. bei einer Probe mit einem bestimmten Material.

Erfindungsgemäß wird zum Bestimmen wenigstens eines Elements die aus der Probe emittierte Gammastrahlung energieaufgelöst gemessen, insbesondere durch Bestimmen von Photopeakzählraten, wobei das Bestimmen ein energieaufgelöstes Auswerten der gemessenen Gammastrahlung gemäß wenigstens einem Gammaspektrum umfasst, insbesondere gemäß einem mit einem jeweiligen Detektor erfassten Gammaspektrum. Dabei kann derselbe Detektor sowohl für prompte als auch für verzögerte Gammastrahlung genutzt werden. Die energieaufgelöste Analyse ermöglicht Flexibilität und Robustheit. Hierdurch wird mit einer Messung auch eine parallele Analyse nahezu aller Elemente ermöglicht.

Das gemessene Gammaspektrum ist spezifisch für einen Detektor. Der jeweilige Detektor kann eine spezifische Auflösung jeweils für ein spezifisches Gammaspektrum aufweisen.

Gemäß einer Ausführungsform umfasst das Messen/Auswerten ein energieaufgelöstes Messen/Auswerten der Intensität der aus der Probe emittierten Gammastrahlung. Dies liefert insbesondere in Verbindung mit dem Auswerten mehrerer Typen von Gammastrahlung eine hohe Flexibilität und Robustheit.

Gemäß einer Ausführungsform umfasst das Bestimmen ein Auswerten der gemessenen Gammastrahlung, wobei das Auswerten umfasst: Korrelieren wenigstens eines Photopeaks einer Zählrate-Energie-Darstellung basierend auf dessen Energie mit einem Element der Probe. Dies liefert sowohl hinsichtlich prompter als auch verzögerter Strahlung eine umfassende Analyse, insbesondere jeweils für ein mit einem von mehreren Detektoren gemessenes Gammaspektrum.

Dabei kann es sich bei dem nachgewiesenen Photopeak um einen prompte oder verzögerte Gammastrahlung charakterisierenden Photopeak handeln. Eine Unterscheidung zwischen prompter und verzögerter Gammastrahlung bei der Auswertung kann basierend auf den jeweiligen Energien erfolgen, insbesondere auch bei Photopeaks, bei denen zwei Gamma-Energien interferieren. Die Bestimmung einer jeweiligen Photopeak-Effizienz kann dabei für beide Arten von Gammastrahlung orts- und energieaufgelöst durch ein numerisches Verfahren erfolgen, bei welchem die Wechselwirkungen von dem Ort der Emission in der Probe (Quellpunkt) bis zur Absorption im Detektor abgebildet werden.

Gemäß einer Ausführungsform umfasst das Auswerten: Quantifizieren des Masseanteils wenigstens eines Elements der Probe, insbesondere indem der Anteil wenigstens eines in der Probe enthaltenen Elements nach Abzug eines Untergrundsignals aus der Nettofläche eines/des Photopeaks ausgewertet wird, den das Element in einer Zählrate-Energie-Darstellung hervorruft.

Dazu kann der Photopeak im Spektrum gefittet werden. Die Fläche unter dem Photopeak kann als Untergrund/Untergrundsignal definiert werden, und der Nettophotopeakfläche kann als Nutzsignal definiert werden.

Gemäß einer Ausführungsform wird/werden die Probe, insbesondere einzelne Partitionen der Probe, kollimiert gemessen, insbesondere mittels wenigstens eines Detektors oder mittels einer Mehrzahl von Detektoren mit spezifisch bezüglich der Geometrie der Partition kollimiertem Sichtbereich. Dies kann die Genauigkeit steigern und ermöglicht auch eine Fokussierung auf Teilbereiche der Probe, insbesondere bei gutem SNR. Bei zwei oder mehr Detektoren ergeben sich insbesondere bezüglich der Messzeit Vorteile. Es hat sich gezeigt, dass beim hier beschriebenen Verfahren die Messzeit desto geringer gewählt werden kann, je mehr Detektoren vorgesehen sind, und/oder dass bei gleicher Messzeit die Sensitivität der Messung erhöht werden kann.

Gemäß einer Ausführungsform wird die Probe in Partitionen unterteilt und die emittierte Gammastrahlung wird bezüglich einer jeweiligen Partition gemessen und ausgewertet. Gemäß einer Ausführungsform erfolgt das Messen, Bestimmen und/oder Auswerten individuell bezüglich einzelner Partitionen der Probe, welche Partitionen vordefiniert sind oder manuell oder automatisch vorgebbar sind, insbesondere durch Kollimation. Dies ermöglicht einen Fokus auf einzelne Bereiche der Probe, oder erleichtert das Auswerten großvolumiger Proben oder von Proben mit inhomogener Zusammensetzung.

Das Partitionieren vereinfacht die Analyse, insbesondere bezüglich einer gewünschten Exaktheit der Auswertung. Das Partitionieren kann als Ergebnis eine ortsaufgelöste Elementzusammensetzung in den jeweiligen Partitionen ermöglichen. Das Partitionieren liefert auch den Vorteil, dass Annahmen leichter oder bei geringerem Fehler getroffen werden können. Beispielsweise werden bei einem zylindrischen Probenkörper acht oder mehr Partitionen, insbesondere 12 Partitionen gebildet, jeweils als Zylindersegment (Kuchenstück). Die Detektoreinheit umfasst dann z.B. zwei Detektoren, die nicht gegenüber voneinander, sondern um einen Winkel versetzt zueinander (Umfangswinkel kleiner 180°, z.B. Umfangswinkel 130 bis 150°) angeordnet sind. Die gesamte Probe kann dann vollumfänglich durch schrittweises Drehen, insbesondere in 60°-Schritten, analysiert werden, z.B. in sechs Schritten bei Verwendung von zwei Detektoren und bei Definition von 12 Partitionen.

Dabei hat sich gezeigt, dass ein Zusammenhang oder eine Abhängigkeit zwischen Kollimation und Partitionierung genutzt werden kann. Die Kollimation kann insbesondere in Funktion der gewählten Partitionierung erfolgen. Eine Steuerungseinrichtung der Vorrichtung kann eingerichtet sein, die Kollimation in Abhängigkeit der gewählten Partitionierung vorzugeben. Folgender Zusammenhang zwischen Kollimation und Partitionierung dann dabei vorgegeben werden: Die gesamte Partition liegt bevorzugt im kollimierten Sichtbereich des Detektors. Dabei liegt nur ein möglichst geringer Raumanteil von anderen Partitionen, also von Partitionen ungleich der Zielpartition, auf die kollimiert wird, im kollimierten Sichtbereich des Detektors. Durch die optional einstellbare Geometrie des Kollimators kann der Sichtbereich primär auf die Zielpartition beschränkt werden.

Es hat sich gezeigt, dass eine Kollimation das Untergrundsignal besonders effektiv schwächen kann. Als kollimiertes Messen ist dabei insbesondere ein Erfassen der Gammastrahlung mit wenigstens einem Detektor mit kollimiertem Sichtbereich zu verstehen. Es hat sich gezeigt, dass das hier beschriebene Verfahren auch dank Kollimation kontinuierlich über einen langen Zeitraum bei besonders vorteilhaftem SNR durchgeführt werden kann.

Gemäß einer Ausführungsform umfasst das Bestimmen ein Auswerten der gemessenen Gammastrahlung, wobei das Auswerten basierend auf der Annahme einer homogenen Massen- und/oder Elementverteilung in der Probe erfolgt, insbesondere einer homogenen Massen- und/oder Elementverteilung in wenigstens einer von mehreren Partitionen der Probe. Dies liefert ein robustes Verfahren, insbesondere bei einem in hohem Grade automatisierten iterativen Verfahren.

Zumindest in einer jeweiligen Partition kann die Element- und Massenverteilung als homogen angenommen werden, so dass die jeweilige Partition einheitlich berechnet/ausgewertet werden kann. Dabei kann die Messgenauigkeit auch dadurch erhöht werden, dass die Partitionen geometrisch so gewählt werden, dass die Annahme homogener Massenverteilung möglichst gut zutrifft, also z.B. keine Kuchenstücke anstelle Scheiben in Höhenrichtung übereinander.

Im Gegensatz dazu erfolgte bei bisherigen Verfahren häufig der analytische Ansatz, dass es sich bei den Elementen um Punktquellen handelt. Bezüglich der Ausgestaltung der Elementverteilung kann eine von zwei initialen Annahmen getroffen werden: entweder Punktquelle oder homogene Element- und Massenverteilung in einer Partition. Es hat sich gezeigt, dass die Annahme einer homogenen Element- und Massenverteilung in Verbindung mit dem hier beschriebenen Verfahren zu einer sehr robusten Messung mit minimierter Unsicherheit führen kann.

Gemäß einer Ausführungsform umfasst das Bestimmen ein Auswerten der gemessenen Gammastrahlung, wobei das Auswerten umfasst: Berechnen des Neutronenflusses innerhalb der Probe, insbesondere innerhalb einer jeweiligen Partition der Probe, basierend auf einer Diffusionsapproximation der linearen Boltzmann-Gleichung, insbesondere orts- und/oder energieaufgelöst, insbesondere basierend auf dem folgenden Zusammenhang:

$$\Phi(\underline{x}, E_n) = \int_{S^2} \Psi(\underline{x}, E_n, \Omega)\, d\Omega$$
.

Dies liefert auch eine schlanke Art und Weise der Berechnung, was Vorteile insbesondere bei Iterationen liefert, in Verbindung mit zuvor genannten Vorteilen.

Gemäß einer Ausführungsform umfasst das Auswerten auch ein Berechnen des Neutronenspektrums innerhalb der Probe, insbesondere innerhalb einer jeweiligen Partition der Probe, insbesondere orts- und/oder energieaufgelöst, insbesondere basierend auf dem folgenden Zusammenhang:

$$\Phi(\underline{x}, E_n) = \int_{S^2} \Psi(\underline{x}, E_n, \Omega)\, d\Omega$$
.

Dies liefert Robustheit in Verbindung mit zuvor genannten Vorteilen.

Gemäß einer Ausführungsform umfasst das Bestimmen ein Auswerten der gemessenen Gammastrahlung, wobei das Auswerten umfasst: Berechnen von energieabhängigen Photopeak-Effizienzen sowie von Neutronenfluss und Neutronenspektrum innerhalb der Probe oder innerhalb einer einzelnen Partition der Probe, insbesondere Berechnen von Neutronenfluss und Neutronenspektrum durch ein approximatives Verfahren, jeweils basierend auf dem folgenden Zusammenhang:

$$\Phi(\underline{x}, E_n) = \int_{S^2} \Psi(\underline{x}, E_n, \Omega)\, d\Omega$$
.

Dies liefert zuvor genannte Vorteile. Es hat sich gezeigt, dass die energieabhängigen Photopeak-Effizienzen, der Neutronenfluss und das energieaufgelöste Neutronenspektrum innerhalb der Probe bzw. innerhalb der einzelnen Partitionen der Probe eine belastbare Grundlage für die Auswertung liefern. Die Eingangsparameter können dabei aus dem Neutronenfluss und dem Neutronenspektrum in der leeren Probenkammer berechnet werden.

Es hat sich gezeigt, dass die Diffusionsapproximation insbesondere eine Berechnung basierend auf einer geringen Anzahl unabhängiger Größen ermöglicht. Hierdurch kann auch die Komplexität der Analyse reduziert werden. Ein sehr genaues alternatives Verfahren wäre eine numerische Lösung der vollen linearen Boltzmann-Gleichung, entweder deterministisch oder mittels eines Monte-Carlo-Verfahrens. Bei beiden Varianten wäre der rechnerische Aufwand aber sehr hoch, insbesondere bei Iteration müsste mit einer Rechenzeit im Bereich von Stunden oder gar Tagen gerechnet werden. Die Diffusionsapproximation liefert eine einfache mathematische Struktur, was die Anwendung einfacher numerischer Methoden erlaubt.

Gemäß einer Ausführungsform umfasst das Bestimmen ein Auswerten der gemessenen Gammastrahlung, wobei das Auswerten zumindest teilweise hinsichtlich der gemessenen Photopeak-Flächen erfolgt, indem eine Mehrzahl von Photopeak-Flächen, die von einer Mehrzahl von Gamma-Energien jeweils wenigstens eines Elements in einer jeweiligen Partition der Probe erzeugt werden, beim Quantifizieren des Masseanteils eines jeweiligen Elements der jeweiligen Partition basierend auf dem folgenden Zusammenhang (jeweils für N oder K Partitionen, wobei der Index K die Partitionen durchläuft) analysiert werden:

$$(P_R)^i_{E_\gamma} = \frac{N_A}{M} \cdot \sum_{k=1}^{N} m_k \cdot \varepsilon^{i \leftarrow k}_{E_\gamma} \cdot \sigma^{ik}_{E_\gamma} \cdot \Phi^i_k$$
.

Anders ausgedrückt: Beim Auswerten kann eine Mehrzahl von Gamma-Energien jeweils wenigstens eines Elements in einer jeweiligen Partition der Probe beim Quantifizieren des Masseanteils eines jeweiligen Elements analysiert werden. Dies liefert ein schlankes, robustes, flexibles Verfahren mit guter Genauigkeit. Es kann eine hohe Güte der Messung/Auswertung sichergestellt werden.

Der Neutronenfluss in der Probe konnte bisher bestimmt werden, indem energieabhängige Korrekturfaktoren integral für die gesamte Probe bestimmt werden. Es hat sich insbesondere für großvolumige Proben gezeigt, dass auch ein approximatives Verfahren zur Bestimmung des Neutronenflusses ohne Energieabhängigkeit und für spezielle Geometrien, die eine Reduktion auf zwei Raumdimensionen erlauben, angewandt werden kann. Ein solches Verfahren basiert insbesondere auf einer Diffusionsgleichung, die durch nur zwei Parameter bestimmt wird. Insbesondere können Aspekte eines Verfahrens angewandt werden, dessen Zusammenhänge im Detail bereits in der folgenden Veröffentlichung betrachtet wurden: R. Overwater, The Physics of Big Sample Instrumental Neutron Activation Analysis, Dissertation, Delft University of Technology, Delft University Press, ISBN 90-407-1048-1 (1994).

Im Gegensatz dazu können der Neutronenfluss und das Neutronenspektrum innerhalb der Probe bzw. der einzelnen Partitionen der Probe gemäß dem vorliegenden Verfahren durch ein Computerprogramm bestimmt werden, wobei eine Diffusionsapproximation der linearen Boltzmann-Gleichung orts- und energieaufgelöst numerisch gelöst wird, insbesondere bei Berücksichtigung aller drei Raumdimensionen. Die Randbedingungen für dieses System von Gleichungen können aus Simulationsrechnungen des Neutronenflusses in der leeren Probenkammer berechnet werden. Energieabhängige Korrekturfaktoren sind nicht erforderlich, bzw. müssen nicht definiert werden.

Das Berechnen und Auswerten des Neutronenflusses und -spektrums kann jeweils individuell für eine jeweilige Partition erfolgen, insbesondere indem die jeweilige Partition basierend auf einer virtuellen Unterteilung der Probe in Raumbereiche definiert wird.

Gemäß einer Ausführungsform wird das Verfahren basierend auf den Eingangsparametern Neutronenquellstärke, Probengeometrie und Probenmasse durchgeführt, insbesondere ausschließlich basierend auf diesen drei Eingangsparametern. Hierdurch kann das Verfahren zu einem hohen Grade automatisiert werden. Es sind dann lediglich drei Eingangsparametern vorzugeben. Weitere Parameter können numerisch/automatisiert ermittelt werden. Hierdurch kann auch der Aufwand seitens eines Benutzers minimiert werden. Weitere Eingangsparameter können z.B. durch kernphysikalische Daten oder durch die simulative Berechnung der Eingangsparameter für die Berechnung von Neutronenfluss und Neutronenspektrum bereitgestellt werden.

Wahlweise kann ein Monitor, bzw. ein Eichmaterial vorbekannter Zusammensetzung, zusammen mit der Probe analysiert werden. Dies kann die Messgenauigkeit oder die Belastbarkeit der Messung erhöhen, insbesondere bei Proben, deren Zusammensetzung unbekannt ist, oder bei Proben, bei welchen Annahmen getroffen werden, die eher unsicher sind. Die Verwendung eines Monitors und die Auswertung der vom Monitor emittierten Gammastrahlung kann jedoch unabhängig von den hier beschriebenen Aspekten des Verfahrens und der Vorrichtung optional erfolgen. Insbesondere kann ein Material verwendet werden, welches mit großer Sicherheit nicht in der Probe vorkommt, beispielsweise Gold in Form einer sehr dünnen Goldfolie, die auf die Probe gelegt wird.

Gemäß einer Ausführungsform wird das Verfahren automatisiert durchgeführt, insbesondere durch Auswerten der gemessenen Gammastrahlung basierend auf abgesehen von den drei Parametern Neutronenquellstärke bei der Bestrahlung, Probengeometrie und Probenmasse, ausschließlich numerisch ermittelten Parametern. Dies liefert Autarkie und die Möglichkeit, auf einfache Weise Iterationen durchzuführen. Das Verfahren wird robuster.

Auch bezüglich der drei zuvor genannten Parameter kann optional eine Automatisierung erfolgen. Die Probengeometrie kann autark durch eine Kameraeinheit erfasst werden, und die Probenmasse durch eine Wägeeinheit. Beide Komponenten Kameraeinheit und Wägeeinheit sind bevorzugt nicht im Inneren der Vorrichtung, also nicht innerhalb des Neutronenfeldes, sondern außerhalb der Probenkammer, insbesondere außerhalb der Abschirmung positioniert. Hierzu kann die Vorrichtung einen Messplatz zur Probenspezifikation aufweisen, an welchem Messplatz die Probe automatisiert charakterisiert werden kann. Die Neutronenquellstärke kann direkt als Regelgröße vom Neutronengenerator bezogen werden. Die Neutronenquellstärke ist direkt von der Hochspannung und der Stromstärke des Neutronengenerators abhängig. Durch diese Erweiterung der Automatisierung kann eine sehr autarke und benutzerfreundliche Vorrichtung bzw. Messanlage bereitgestellt werden.

Gemäß einer Ausführungsform wird zum Charakterisieren der Probe wenigstens eine Messung aus der folgenden Gruppe ausgeführt: Transmissionsmessung, Probenwägung, optische Erfassung der Probengeometrie. Dies erleichtert einerseits die Handhabung des Messverfahrens für den Benutzer, und andererseits erleichtert es auch die nachfolgende Messung, insbesondere auch bezüglich einer Partitionierung.

Gemäß einer Ausführungsform wird das Verfahren iterativ durchgeführt, insbesondere jeweils bezüglich einzelner Elemente oder bezüglich der kompletten Zusammensetzung der Probe oder bezüglich einzelner Partitionen der Probe. Dies liefert gute Genauigkeit, insbesondere bei einem einfach zu handhabenden Verfahren. Dies liefert auch ein Verfahren mit einem hohen Grad an Autarkie.

Zumindest eine der zuvor genannten Aufgaben wird auch gelöst durch Verwendung einer Detektoreinheit gemäß Anspruch 11.

Zumindest eine der zuvor genannten Aufgaben wird auch gelöst durch Verwendung wenigstens einer Neutronenquelle bei einem zuvor beschriebenen Verfahren zur Multielementanalyse einer Probe basierend auf Neutronenaktivierung zum Generieren von schnellen Neutronen zur kontinuierlichen Bestrahlung der Probe mit ersten Neutronen mit wenigstens einem Neutronenenergiewert aus der folgenden Gruppe: 2.45MeV, 14.1MeV; und/oder mit zweiten Neutronen mit einer Neutronenenergie mit wenigstens einem Wert im Energiebereich 10keV bis 20MeV, insbesondere 10keV bis 10MeV; und/oder mit dritten Neutronen mit einer Neutronenenergie von maximal 10MeV. Hierdurch ergeben sich zuvor genannte Vorteile. Bevorzugt wird die emittierte Gammastrahlung mit einem Detektor mit einem Kollimator aus Blei oder Bismut detektiert.

Zumindest eine der zuvor genannten Aufgaben wird auch gelöst durch ein zuvor beschriebenes Verfahren, durchgeführt mittels einer Steuerungseinrichtung eingerichtet zum Ansteuern wenigstens eines Neutronengenerators einer Vorrichtung zur Multielementanalyse basierend auf Neutronenaktivierung, insbesondere einer hier beschriebenen Vorrichtung, wobei der Neutronengenerator eingerichtet ist zum Generieren von schnellen Neutronen mit Energie im Bereich von 10keV bis 20MeV, insbesondere 10keV bis 10MeV, wobei die Steuerungseinrichtung eingerichtet ist zum Ansteuern des Neutronengenerators zum Generieren der Neutronen und zum Bestrahlen der Probe auf ungepulste kontinuierliche Weise, insbesondere während wenigstens eines ersten Zeitfensters, und wobei die Steuerungseinrichtung ferner eingerichtet ist zum Ansteuern wenigstens eines Detektors zum kontinuierlichen und/oder zeitweisen Messen von aus der Probe oder einer einzelnen Partition der Probe emittierter Gammastrahlung simultan zur Bestrahlung, insbesondere während wenigstens eines zweiten Zeitfensters unabhängig vom ersten Zeitfenster, kontinuierlich simultan zur kontinuierlichen Bestrahlung und/oder zeitunabhängig davon. Das erste und zweite Zeitfenster können unterschiedlich sein bzw. unabhängig voneinander vordefiniert sein oder eingestellt werden. Die Steuerungseinrichtung ist insbesondere eingerichtet zum Steuern eines zuvor beschriebenen Verfahrens.

Diese Art der Analyse liefert zuvor genannte Vorteile. Die Steuerungseinrichtung kann dabei zumindest das Bestrahlen, Messen und wahlweise auch das Positionieren der Probe (insbesondere durch Ansteuern/Regeln einer Dreh-/Hubeinrichtung) synchronisieren und somit das eigentliche Messverfahren der Messanlage steuern, insbesondere die Art und Weise und den Zeitraum der Datenerhebung. Mittels dieser Steuerungseinrichtung kann das Bestrahlen und Messen insbesondere über einen Zeitraum von z.B. mindestens 20 oder 50Sek. erfolgen, oder auch über mehrere Stunden oder Tage. Die Steuerungseinrichtung kann an eine Dreh-/Hubeinrichtung gekoppelt sein und ferner eingerichtet sein zum Positionieren einer auf einem Probenträger angeordneten Probe mittels der Dreh-/Hubeinrichtung, insbesondere gemäß oder in Abhängigkeit von der Geometrie von Partitionen der Probe. Dies liefert nicht zuletzt die Möglichkeit, mittels einer einzigen Steuerungseinrichtung die gesamte Vorrichtung anzusteuern bzw. das gesamte Verfahren ablaufen zu lassen (Drei-Funktions-Steuerungseinrichtung), umfassend Ansteuerung des Neutronengenerators, Ansteuerung des wenigstens einen Detektors, und Positionierung der Probe. Dem Neutronengenerator können dabei z.B. Parameter wie die Neutronenquellstärke vorgegeben werden, und der Dreh-/Hubeinrichtung können Positionsdaten oder Verlagerungswege und Verlagerungsgeschwindigkeiten vorgegeben werden.

Die Steuerungseinrichtung kann eingerichtet sein zum Steuern des Betriebs eines Neutronengenerators eingerichtet zur Fusion von Deuteronen zum Generieren von schnellen Neutronen zur Multielementanalyse einer Probe durch kontinuierliches, ungepulstes Bestrahlen der Probe.

Die Vorrichtung oder die Steuerungseinrichtung kann eine Eingabemaske (Benutzerschnittstelle) oder Eingabeeinheit zur manuellen Eingabe der folgenden drei Parameter aufweisen: Neutronenquellstärke bei der Bestrahlung, Probengeometrie und Probenmasse. Diese Parameter können auch in einem Datenspeicher hinterlegt werden und von der Steuerungseinrichtung ausgelesen werden und einem Computerprogrammprodukt übergeben werden.

Zumindest eine der zuvor genannten Aufgaben wird auch gelöst durch ein Computerprogrammprodukt gemäß Anspruch 12, insbesondere eingerichtet zum partitionskollimierten Auswerten gemessener Gammastrahlung basierend auf dem folgenden Zusammenhang:

$$(P_R)^i_{E_\gamma} = \frac{N_A}{M} \cdot \sum_{k=1}^{N} m_k \cdot \varepsilon^{i \leftarrow k}_{E_\gamma} \cdot \sigma^{ik}_{E_\gamma} \cdot \Phi^i_k$$

Diese Formel betrifft dabei die erfindungsgemäße Bestimmung von Elementmassen in einer einzelnen Partition. Dieses Computerprogrammprodukt ermöglicht einen hohen Grad an Automatisierung bzw. Autarkie, in Verbindung mit einer hohen Genauigkeit der Analyse. Das Computerprogrammprodukt ist insbesondere eingerichtet zum automatisierten Durchführen einer zuvor beschriebenen Art der Auswertung. Als partitionskollimiertes Auswerten ist dabei ein Auswerten individuell hinsichtlich einzelner Partitionen der Probe zu verstehen, welche Partitionen geometrisch zuvor definiert und voneinander abgegrenzt wurden.

Das Computerprogrammprodukt kann zusätzlich auch eingerichtet sein zum Vorgeben einer Soll-Position der Probe, insbesondere in Abhängigkeit einer erfassten oder eingegebenen Probengeometrie, insbesondere basierend auf in einer Positionsdatenbank hinterlegten Soll-Positionen als Funktion der Probengeometrie und/oder Probengröße, wobei das Positionieren insbesondere durch Ansteuern/Regeln einer Dreh-/Hubeinrichtung erfolgen kann.

Das Computerprogrammprodukt kann eingerichtet sein, verschiedene Varianten einer Partitionierung für eine jeweilige Probengeometrie zu berechnen und eine als optimal identifizierte Partitionierung vorzuschlagen oder direkt autonom auszuwählen. Hierzu kann das Computerprogrammprodukt eine überschlägige Unsicherheitsanalyse in Abhängigkeit der Anzahl und Ausgestaltung der Partitionen durchführen und in Abhängigkeit der vom Benutzer geforderten Genauigkeit die Partitionierung festlegen bzw. autonom bestimmen. Bei dieser Vorgehensweise kann ein konfigurierbarer Kollimator spezifisch bezüglich der gewählten Partitionen eingestellt werden.

Zumindest eine der zuvor genannten Aufgaben wird demnach auch gelöst durch ein Computerprogramm eingerichtet zum Bereitstellen der hier beschriebenen Art und Weise der Auswertung bzw. der hier beschriebenen diesbezüglichen Verfahrensschritte.

Gemäß einem Ausführungsbeispiel ist das Computerprogrammprodukt eingerichtet zum Auswerten einer integralen Messung, insbesondere bezüglich einer nicht-partitionierten Probe basierend auf einem einzigen Gammaspektrum, insbesondere basierend auf dem folgenden Zusammenhang:

$$(P_R)_{E_\gamma} = \frac{m \cdot \varepsilon_{E_\gamma} \cdot N_A \cdot \sigma_{E_\gamma} \cdot \Phi}{M}.$$

Dies liefert eine Vereinfachung bezüglich der Annahme einer homogenen Massenverteilung.

Das erfindungsgemäße Verfahren kann auch wie folgt beschrieben werden. Bei einem Verfahren zur zerstörungsfreien Elementanalyse von Proben wird die jeweilige Probe kontinuierlich mit schnellen Neutronen bestrahlt, wobei simultan zur Bestrahlung die von der Probe ausgesendete/emittierte Gammastrahlung gemessen wird, wobei die Menge eines in der Probe enthaltenen Elements nach Abzug des Untergrundsignals aus der Nettofläche des Photopeaks ausgewertet wird, den das Element in einer Zählrate-Energie-Darstellung hervorruft. Dabei kann die Quantifizierung der Elementmassen einer Probe automatisiert ablaufen, und die für die Analyse erforderlichen Parameter, außer die Neutronenquellstärke bei der Bestrahlung und die Geometrie und Gesamtmasse der Probe, können numerisch berechnet werden. Ein Monitor für den Neutronenfluss oder ein probeninterner oder externer Kalibrierstandard ist nicht erforderlich. Dabei kann die Probe in Raumbereiche (Partitionen) zerlegt werden und jede Partition der Probe kann kollimiert gemessen werden. Dabei kann die Bestimmung der Elementmassen der Probe darauf basieren, dass die Element- und Massenverteilung in einzelnen Partitionen der Probe als homogen angenommen wird. Dabei kann die mittlere Dichte einer Partition durch eine Transmissionsmessung mit einem radioaktiven Gammastrahler erfolgen. Dabei kann der Neutronenfluss innerhalb der Partitionen der Probe durch ein analytisches Verfahren bestimmt werden, welches eine Diffusionsapproximation der linearen Boltzmann-Gleichung numerisch löst und Randbedingungen für dieses System von Gleichungen aus Simulationsrechnungen des Neutronenflusses in der leeren Probenkammer berechnet. Dabei kann die Bestimmung der Photopeak-Effizienzen orts- und energieaufgelöst durch ein numerisches Verfahren erfolgen, bei welchem die Wechselwirkungen von der Emission in der Probe (Quellpunkt) bis zur Absorption im Detektor abgebildet werden. Dabei kann das Verfahren iterativ bezüglich der Zusammensetzung der Probe so lange durchgeführt werden, bis sich die berechnete Zusammensetzung der Probe stabilisiert. Dabei können sämtliche detektierten Photopeak-Flächen, die von verschiedenen Gamma-Emissionen eines Elements in der Probe erzeugt werden, in der analytischen Auswertung berücksichtigt werden. Dabei können bei der analytischen Auswertung die Ergebnisse der Messung einer jeden Partition berücksichtigt werden, wodurch die Sensitivität und die Genauigkeit des Messverfahrens für die gesamte Probe verbessert werden kann. Dabei können sich die Neutronenquelle und die Probe in einer als Moderationskammer ausgebildeten Probenkammer aus Graphit befinden. Dabei kann sich direkt um eine/die Moderationskammer oder um die Probenkammer herum eine wirksame Abschirmung für Neutronenstrahlung befinden. Dabei kann sich der Detektor bzw. die Detektoreinheit in einem Kollimator aus Gammastrahlen abschirmendem Material befinden. Dabei kann die Geometrie der Proben- und Moderationskammer und/oder des Probenträgers den Neutronenflussgradienten innerhalb der Probe reduzieren, was insbesondere mittels veränderlicher Moderationslängen (Wegstrecke zwischen Neutronenquelle/Neutronenquellpunkt und Probe) erzielt werden kann, mit dem Effekt, dass der Neutronenflussgradient reduziert bzw. verändert wird.

Zumindest eine der zuvor genannten Aufgaben wird auch gelöst durch eine Vorrichtung zur Multielementanalyse basierend auf Neutronenaktivierung gemäß Anspruch 13.

Hierdurch ergeben sich zuvor genannte Vorteile, insbesondere in Verbindung mit einem niedrigen oder vorrichtungs- und/oder verfahrenstechnisch minimierten Untergrundsignal.

Als einzelner Detektor (einer Detektoreinheit) wird bevorzugt ein Halbleiter- oder Szintillationsdetektor verwendet, also ein Detektor mit hoher Energieauflösung, welcher eingerichtet ist für die Messung der prompten und verzögerten Gammastrahlung. Das Verfahren wird mittels einer unabhängig von der Probekammer vorgesehenen Moderationskammer variiert. Die Moderationskammer kann standardmäßig ortsfest in der Vorrichtung vorgesehen/eingebaut sein. Der Prozess einer Moderation kann in gewünschter Art und Weise in der Probenkammer, in der Moderationskammer und/oder in der Probe selbst durchgeführt werden.

Die jeweiligen Detektoren der Vorrichtung können durch wenigstens einen Kollimator fokussiert werden. Ein Kollimator eingerichtet zum Vorgeben oder Eingrenzen oder Einstellen des Sichtbereiches des Detektors liefert insbesondere den Vorteil eines verbesserten SNR speziell auch im Zusammenhang mit kontinuierlicher Bestrahlung. Zudem kann die Probe partitionskollimiert gemessen werden.

Bevorzugt sind mehrere Detektoren in derselben Höhenebene angeordnet, insbesondere in der Höhenebene der Neutronenquelle bzw. des Neutronenquellpunktes. Bevorzugt sind der oder die Detektoren möglichst nahe zum Neutronenquellpunkt angeordnet. Dies liefert gute Messergebnisse bzw. ermöglicht das Minimieren von Untergrundsignalen. In einer Draufsicht bei einer Anordnung in derselben Höhenebene sind die Detektoren bevorzugt um weniger als 90° in Umfangsrichtung relativ zum Neutronenquellpunkt versetzt, beispielsweise um 60 oder 75°.

Als Neutronenquellpunkt ist dabei bevorzugt der Ort bzw. die Position zu verstehen, an welcher die Neutronen emittiert werden, insbesondere in die Probenkammer auf die Probe abgestrahlt werden. Der Neutronengenerator kann unabhängig von der Position des Neutronenquellpunktes angeordnet sein, oder aber die Position des Neutronenquellpunktes vorgeben.

Der Kollimator kann wie auch eine/die Moderationskammer fest installiert sein, in einer einzigen vordefinierten Einstellung oder Konfiguration. Wahlweise kann der Kollimator auch mehrere Einstellungen aufweisen, jeweils für einen vordefinierbaren Sichtbereich, z.B. eine erste Einstellung mit einem relativ weiten/breiten Sichtbereich, eine zweite Einstellung mit einem mittleren Sichtbereich, und eine dritte Einstellung mit einem relativ engen/schmalen/fokussierten Sichtbereich, wobei der Kollimator zwischen den Einstellungen umschaltbar sein kann.

Gemäß einem Ausführungsbeispiel umfasst die Vorrichtung wenigstens eine ein Untergrundsignal der Vorrichtung schwächende Komponente aus der folgenden Gruppe: wenigstens einen den Sichtbereich des (jeweiligen) Detektors auf die Probe, insbesondere auf eine Partition der Probe einschränkenden Kollimator, bevorzugt einen Kollimator aus Blei oder Bismut, und/oder eine Moderationskammer aus Graphit, und/oder eine Abschirmung aus boriertem Polyethylen, und/oder eine Probenkammer und/oder einen Probenträger jeweils zumindest teilweise aus Graphit oder vollständig fluorierten Kunststoffen oder Beryllium. Hierdurch kann insbesondere ein verbessertes SNR erzielt werden. Der Kollimator weist bevorzugt eine Wanddicke von mindestens 5cm auf. Die Vorrichtung kann die Probe zerstörungsfrei analysieren und dabei die emittierte Gammastrahlung hinsichtlich zahlreicher Aspekte auswerten. Die Vorrichtung ist nicht beschränkt auf die Auswertung einer bestimmten Art von Gammastrahlung oder in einem bestimmten Zeitfenster.

Es hat sich gezeigt, dass ein vorteilhafter Winkel zwischen Neutronengenerator und Detektor zwischen 50 und 90° liegt, insbesondere da dadurch vermieden werden kann, dass der Detektor einem zu hohen Neutronenfluss ausgesetzt wird. Zudem kann der Detektor in diesem Winkelbereich auf einen Raumbereich fokussiert werden, in welchem der Neutronenfluss in der Probe möglichst maximal hoch ist.

Bisher hatte Gammastrahlung aus inelastischen Wechselwirkungen (Streuprozessen) in bisher genutzten Anlagen ein derart starkes Untergrundsignal erzeugt, dass erst nach einer gewissen Wartezeit (Zeitfenster) nach einem Neutronenpuls die Detektion der Gammastrahlung möglich war. Bisher verwendete Detektoren bzw. die Detektoren in bisher verwendeten Anlagen waren bisher kurz nach einem jeweiligen Neutronenpuls nahezu "blind". Die zu hohe Signalrate führte dazu, dass der Detektor paralysiert wurde. Der Detektor benötigte dann jeweils eine gewisse Wartezeit, bis eine Detektion wieder erfolgen kann, also bis die Signalrate wieder gesunken ist.

Gemäß einem Ausführungsbeispiel umfasst die Vorrichtung ferner ein Computerprogrammprodukt oder einen Datenspeicher damit, wobei das Computerprogrammprodukt eingerichtet ist zum Bestimmen wenigstens eines Elements der Probe durch Auswerten der gemessenen Gammastrahlung basierend auf energieabhängigen Photopeak-Effizienzen sowie Neutronenfluss und Neutronenspektrum innerhalb der Probe oder innerhalb einer einzelnen Partition der Probe durch ein analytisches Verfahren, insbesondere basierend auf wenigstens einem der zuvor bezüglich des Computerprogrammproduktes bereits beschriebenen Zusammenhänge. Diese Formeln oder Zusammenhänge können jeweils als eine von mehreren Berechnungsgrundlagen in einem Datenspeicher hinterlegt sein, mittels welchem das Computerprogrammprodukt interagiert oder auf welchen es zugreift. Dies liefert neben hoher Flexibilität bei der Bestimmung/Auswertung auch die Option einer vollautomatischen, iterativen Multielementanalyse, insbesondere in Verbindung mit einer Steuerungseinrichtung zum Steuern/Regeln von Neutronenemission, Detektoren und/oder einer Dreh-/Hubeinrichtung.

Gemäß einem Ausführungsbeispiel weist die Vorrichtung ferner eine Dreh- und/oder Hubeinrichtung eingerichtet zum translatorischen und/oder rotatorischen Verlagern des Probenträgers oder der Probe auf, bevorzugt eine aus einer/der Probenkammer der Vorrichtung entkoppelte Dreh- und/oder Hubeinrichtung, wobei zumindest ein elektrischer Antrieb der Dreh-/Hubeinrichtung außerhalb einer Abschirmung (insbesondere außerhalb einer Abschirmung aus boriertem Polyethylen) der Vorrichtung angeordnet ist. Dies liefert auch ein gutes SNR.

Gemäß einem Ausführungsbeispiel weist die Vorrichtung ferner eine Einheit zur Transmissionsmessung auf, welche eingerichtet ist zur Bestimmung der mittleren Dichte der Probe bzw. der jeweiligen Partition. Die Transmissionseinheit umfasst einen radioaktiven Gammastrahler, insbesondere Eu-154 oder Co-60, und einen Detektor zur Messung der Abschwächung der Gammastrahlung nach Durchdringung der Probe. Der Detektor zur Messung der Abschwächung der Gammastrahlung kann dabei einer der Detektoren für die prompte und verzögerte Gammastrahlung sein, oder kann auch ein spezifisch für diese Transmissionsmessung bereitgestellter Detektor sein. Während der Transmissionsmessung wird die Probe nicht mit Neutronen bestrahlt. Dies ermöglicht die Unterscheidung der Art der Gammastrahlung.

Gemäß einem Ausführungsbeispiel umfasst die Vorrichtung wenigstens zwei Detektoren, insbesondere in symmetrischer Anordnung relativ zum Neutronengenerator und/oder relativ zu wenigstens einer Neutronenquelle bzw. zu wenigstens einem Neutronenquellpunkt der Vorrichtung. Hierdurch kann die jeweilige Partition optimal vor einem jeweiligen Detektor positioniert oder ausgerichtet werden. Auch können die Partitionen geometrisch in Abhängigkeit der Geometrie der Probe definiert werden, und die Probe kann entsprechend ausgerichtet werden, z.B. in sechs Drehschritten einmal vollumfänglich gedreht werden.

Die Translation und/oder Rotation kann derart durchgeführt werden, dass sich der Mittelpunkt einer jeweiligen Partition auf der Höhe des Detektors bzw. auf der Sichtachse des Detektors befindet, oder derart, dass die Probe bzw. Partition sich in einem kollimierten Sichtbereich des Detektors befindet.

Gemäß einem Ausführungsbeispiel umfasst die Vorrichtung ferner eine/die Steuerungseinrichtung eingerichtet zum automatisierten kontinuierlichen Bestrahlen und/oder eingerichtet zum Steuern/Regeln eines automatisierten Messens bei kontinuierlich applizierter Neutronenbestrahlung zeitunabhängig von der Neutronenbestrahlung simultan zum kontinuierlichen Bestrahlen, insbesondere eingerichtet zum iterativen automatisierten Auswerten der emittierten und gemessenen Gammastrahlung bezüglich einzelner Elemente oder bezüglich der kompletten Zusammensetzung der Probe oder bezüglich einzelner Partitionen der Probe zeitunabhängig von der Neutronenbestrahlung und basierend auf abgesehen von den drei manuell oder automatisch vorgebbaren Parametern Neutronenquellstärke bei der Bestrahlung, Probengeometrie und Probenmasse, ausschließlich numerisch ermittelten oder von der Steuerungseinrichtung ausgelesenen Parametern. Dies liefert die Möglichkeit, einzelne Schritte oder auch das gesamte Verfahren automatisiert ablaufen zu lassen.

Gemäß einem Ausführungsbeispiel umfasst der Neutronengenerator wenigstens eine Neutronenquelle bzw. einen Neutronenquellpunkt eingerichtet zur Fusion von Deuteronen (Deuteriumkernen), insbesondere mit Deuteriumgas als gasförmiges Target bzw. gasförmigem Betriebsstoff. Es hat sich gezeigt, dass auch durch die Fusion von Deuteronen eine ausreichend hohe Quellstärke sichergestellt werden kann. Die Nutzung dieses Energiebereiches liefert Vorteile beim kontinuierlichen Bestrahlen und auch beim Messen und Auswerten, einerseits aufgrund einer niedrigen Neutronenenergie, andererseits hinsichtlich einer langen Bestrahlungsdauer. Der Betriebsstoff kann gasförmig (anstelle fest) sein, so dass ein Austausch eines nach gewisser Dauer verbrauchten festenTargets (Feststoff) nicht mehr erforderlich ist. Dies vereinfacht insbesondere die Analyse über einen langen Zeitraum, und kann hohe Reproduzierbarkeit oder hohe Sicherheit der Messergebnisse sicherstellen.

Gemäß einem Ausführungsbeispiel ist der Neutronengenerator ein elektrisch betriebener Neutronengenerator oder weist wenigstens eine Radionuklidneutronenquelle wie z.B. eine AmBe-Quelle auf. Bevorzugt wird ein Neutronengenerator, welcher Deuteronen fusioniert und mittels dieser Fusionsreaktion Neutronen mit einer Startenergie von 2.45MeV emittiert. Dabei kann wahlweise auch eine gepulste Bestrahlung speziell bei 2.45MeV erfolgen. Im Gegensatz dazu wird bei bisheriger gepulster Bestrahlung häufig ein Neutronengenerator zum Fusionieren von Tritium-Deuterium (14.1MeV) verwendet, für Neutronen mit exakt diesem einen Energiewert. Gemäß einem Ausführungsbeispiel ist der wenigstens eine Detektor ein Halbleiter- oder Szintillationsdetektor. Dies ermöglicht eine exakte Auswertung sowohl prompter als auch verzögerter Gammastrahlung in einem breiten Energiebereich.

Insbesondere auch durch die Verwendung eines Neutronengenerators eingerichtet zur Fusion von Deuteronen, insbesondere mit Deuteriumgas als gasförmiges Target bzw. gasförmigem Betriebsstoff, zum Generieren von schnellen Neutronen zur Multielementanalyse einer Probe basierend auf Neutronenaktivierung, insbesondere zum kontinuierlichen, ungepulsten Bestrahlen der Probe, lassen sich zuvor genannte Vorteile bei einem zuvor beschriebenen Verfahren realisieren.

KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:

   Figur 1 in einer perspektivischen Ansicht in schematischer Darstellung eine Vorrichtung zur zerstörungsfreien Multielementanalyse gemäß einem Ausführungsbeispiel;
   Figur 2A, 2B, 2C jeweils in einer Schnittansicht eine Probenkammer mit einem bzw. zwei Detektoren sowie in Detailansicht einen Detektor jeweils einer Vorrichtung zur zerstörungsfreien Multielementanalyse gemäß einem Ausführungsbeispiel;
   Figur 3 in schematischer Darstellung im Flussdiagramm einzelne Schritte eines Verfahrens gemäß einer Ausführungsform;

Figur 4 eine zylindrische Probe mit einer Partitionierung in Form von Scheibensegmenten, als ein Beispiel für eine Partitionierung bei einem Verfahren gemäß einer Ausführungsform; und

Figur 5 in einer Schnittansicht eine Probenkammer mit einer außerhalb einer Abschirmung angeordneten Dreh- und Hubeinrichtung einer Vorrichtung gemäß einem Ausführungsbeispiel.

## DETAILLIERTE BESCHREIBUNG DER FIGUREN

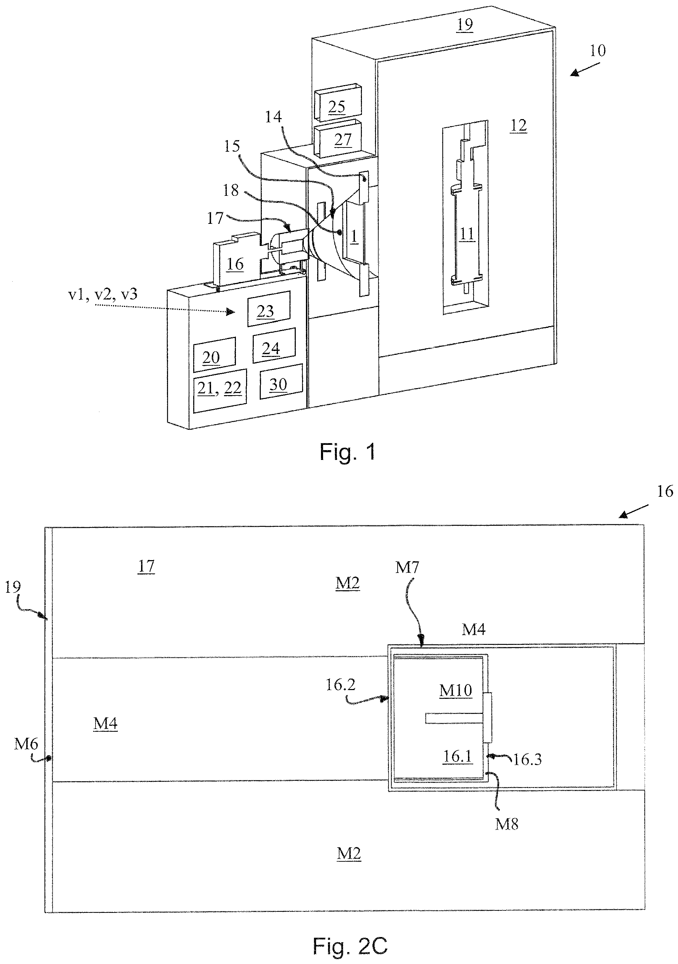

In der Fig. 1 ist eine Baugruppe einer Vorrichtung 10 zur zerstörungsfreien Multielementanalyse gezeigt, und zwar in der Art einer Messanlage zur Durchführung des hier beschriebenen Verfahrens zur Multielementanalyse basierend auf Neutronenaktivierung.

Durch den Betrieb eines oder mehrerer Neutronengeneratoren 11 wird eine Probe 1 kontinuierlich mit Neutronen bestrahlt und simultan zur Bestrahlung die hierdurch induzierte/emittierte Gammastrahlung gemessen. Die Vorrichtung/Messanlage 10 samt Probe 1 besteht insbesondere aus den folgenden Baugruppen: Der Neutronengenerator 11 umfasst wenigstens eine elektrisch betriebene Neutronenquelle, insbesondere eine Neutronenquelle, welche zumindest Deuterium und Deuterium (bzw. Deuteronen) fusioniert, und wahlweise eine weitere Art einer Fusion ermöglicht, insbesondere Tritium und Deuterium. Bei der Deuteronen-Fusionsreaktion werden schnelle Neutronen mit einer Energie von 2.45MeV emittiert. Dabei wird bevorzugt Deuteriumgas als Target verwendet (nicht radioaktiv). Wahlweise kann auch wenigstens ein weiterer Energiewert, insbesondere 14.1MeV mittels des Neutronengenerators bereitgestellt werden. Der Neutronengenerator 11 befindet sich innerhalb einer Moderationskammer 12 und ist umgeben von einer Abschirmung 19. Die Moderationskammer 12 besteht aus einem Material, welches schnelle Neutronen möglichst wirksam moderiert und welches bei einem Moderationsprozess möglichst wenig Gammastrahlung emittiert, vorzugsweise Graphit. Gammastrahlung, die nicht aus der Probe emittiert wird und dennoch vom Detektor registriert wird, wird als aktives Untergrundsignal definiert. Die hier beschriebene Vorrichtung 10 liefert vorteilhafter Weise ein sehr schwaches, minimiertes Untergrundsignal, so dass Gammastrahlung auf sehr flexible Weise gemessen werden kann.

Die Probe 1 befindet sich während der Bestrahlung auf einem Probenträger 14 im Inneren einer Probenkammer 15. Bei dem Probenträger kann es sich beispielsweise um einen Drehteller, eine Box, eine Dose oder eine Flasche handeln. Vorzugsweise kommt als Material für den Probenträger 14 Graphit sowie vollständig fluorierter Kunststoff zum Einsatz.

Der Probenträger 14 und die Probenkammer 15 sind so gestaltet, dass die Neutronen die Probe möglichst homogen (also mit einem geringen örtlichen Neutronenflussgradienten) bestrahlen, und dass Neutronen, die aus der Probe entweichen, wirksam in die Probe zurück reflektiert werden. Bei den Wechselwirkungen zwischen den Neutronen und dem Probenträger 14 sowie der Probenkammer 15 sollte ein möglichst nur schwaches aktives Untergrundsignal hervorgerufen werden. Dies kann insbesondere dadurch sichergestellt werden, dass als Material für den Probenträger 14 und die Probenkammer 15 vorzugsweise Graphit, Beryllium sowie vollständig fluorierte oder kohlenstofffaserverstärkte Kunststoffe zum Einsatz kommen.

Das simultan zur Bestrahlung gemessene Gammaspektrum wird durch eine Detektoreinheit 16 bzw. durch einen oder mehrere Detektoren 16A, 16B aufgenommen. Als Detektoreinheit 16 können sowohl ein als auch mehrere Detektoren verstanden werden. Durch mehrere Detektoren kann die Messzeit einer Probe verringert werden bzw. bei gleicher Messzeit kann die Sensitivität und Genauigkeit des Multielementanalyseverfahrens erhöht werden. Die Detektoreinheit 16 registriert die Energie der Gammastrahlung, die aus der Probe emittiert wird, und zählt die Energiedepositionen im Detektor. Um einen jeweiligen Detektor 16 herum befindet sich ein Kollimator 17. Mittels des jeweiligen Kollimators kann der "Sichtbereich" der verwendeten Detektoren derart eingeschränkt werden, dass hauptsächlich Gammastrahlung nachgewiesen wird, die aus der Probe emittiert wird. Der Raumbereich mit erhöhter Nachweiswahrscheinlichkeit für Gammastrahlung weist ausgehend vom Detektor insbesondere die Form eines Kegels oder einer Pyramide auf. Der Kollimator 17 ist aus einem Material gefertigt, welches Gammastrahlung möglichst wirksam abschirmt, vorzugsweise Blei. Der Kollimator ermöglicht dank des eingeschränkten Sichtbereichs des Detektors, das aktive Untergrundsignal zu minimieren bzw. zu schwächen.

Die Probe kann segmentiert/partitioniert gemessen werden. Hierzu befinden sich bei einer einzelnen gammaspektrometrischen Messung nicht der gesamte Probenkörper, sondern nur einzelne Segmente, so genannte Partitionen, im kollimierten Sichtbereich des Detektors. Zur Positionierung der einzelnen Partitionen im Sichtbereich des Detektors ist zur Rotation und/oder Translation von Probe und Probenträger eine Dreh- und Hubvorrichtung 18 vorgesehen. Die Dreh- und Hubvorrichtung und der Probenträger sind insbesondere durch Kraft- und/oder Formschluss miteinander verbunden. Da die Komponenten der Dreh- und Hubvorrichtung das aktive Untergrundsignal erhöhen könnten, werden diese Baugruppen bevorzugt außerhalb der Proben- und Moderationskammer 15, 12 und außerhalb der Abschirmung 19 positioniert (Fig. 5). Zur Kraftübertragung zwischen der Dreh- und Hubvorrichtung und dem Probenträger 14 kann insbesondere eine Welle, Kette oder ein Zahnriemen verwendet werden.

Die Abschirmung 19 ist um die Moderations- und Probenkammer 12, 15 sowie um die Detektoreinheit 16 und um den Kollimator 17 herum angeordnet. Die Abschirmung 19 umschließt die Messanlage und reduziert die Neutronen- und Gamma-Ortsdosisleistung außerhalb der Messanlage. Vorzugsweise kommt als Material für den Teil der Abschirmung, welcher primär Neutronenstrahlung abschirmt, boriertes Polyethylen zum Einsatz. Als Materialien für den Teil der Abschirmung, welcher primär die Gammastrahlung reduziert bzw. abschwächt, können Beton sowie Elemente mit hoher Ordnungszahl und hoher Dichte zum Einsatz kommen, wie beispielsweise Stahl oder Blei. Es hat sich gezeigt, dass durch boriertes Polyethylen im Bereich der Moderations- und Probenkammer 12, 15 bzw. darum herum, sowie um die Detektoreinheit 16 und um den Kollimator 17 das SNR signifikant verbessert werden kann.

In Fig. 1 ist ferner angedeutet, dass an der Eingabemaske 23 wenigstens einer von wenigstens drei Variablen/Parametern v1, v2, v3 eingegeben oder abgerufen werden kann, insbesondere die Neutronenquellstärke, die Probengeometrie, und/oder die Probenmasse. Diese drei Parameter können gemäß einer Variante auch vollautomatisch von der Vorrichtung 10 ermittelt werden.

Bei der in Fig. 1 gezeigten Anordnung kann eine Moderation in der separaten Moderationskammer 12 außerhalb der Probenkammer 15 durchgeführt werden. Wahlweise kann auch innerhalb der Probenkammer 15 moderiert werden. Eine Moderation kann allgemein in der Moderationskammer 12, in der Probenkammer 15 und/oder in der Probe 1 selbst durchgeführt werden.

In Fig. 1 ist ferner eine Transmissionsmesseinheit 24 gezeigt, mittels welcher wahlweise eine zusätzliche Charakterisierung einer Probe erfolgen kann, insbesondere basierend auf Gammabestrahlung.

In Fig. 1 sind ferner Komponenten zum Automatisieren der Messung bzw. Auswertung angedeutet, insbesondere eine Steuerungseinrichtung 20, die gekoppelt ist an einen Datenspeicher 21, an eine kernphysikalische Datenbank 22, an eine Eingabeeinheit/-maske 23, an eine Transmissionsmesseinheit 24, an eine Kameraeinheit 25, an eine Wägeeinheit 27, und/oder an ein Computerprogrammprodukt 30, wobei letzteres auch in der Steuerungseinrichtung 20 hinterlegt sein kann.

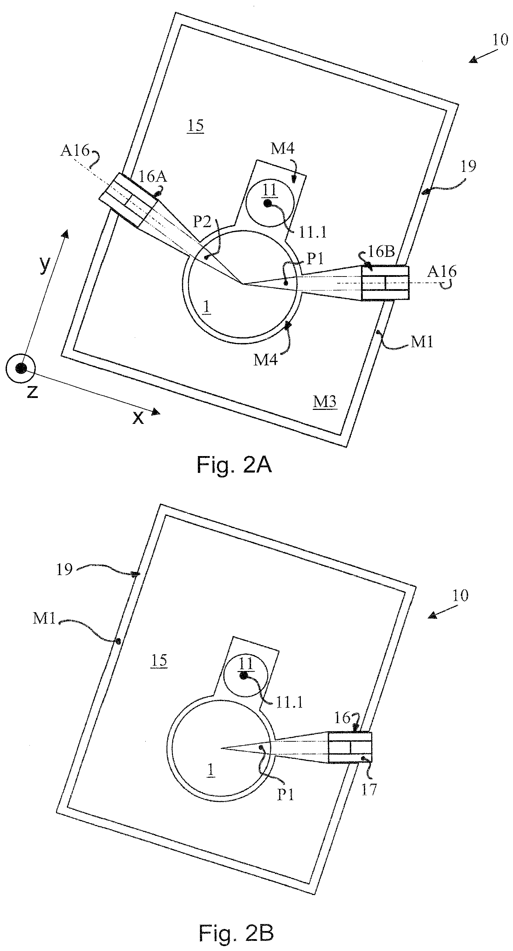

Fig. 2A, 2B, 2C zeigen eine Vorrichtung zur zerstörungsfreien Multielementanalyse, mittels welcher eine kollimierte Messung von Partitionen einer Probe erfolgt. Bei der in Fig. 2A gezeigten Variante sind die beiden Detektoren 16A, 16B symmetrisch relativ zu einer Neutronenquelle bzw. zu einem Neutronenquellpunkt 11.1 des Neutronengenerators 11 angeordnet.

Fig. 2A, 2B, 2C zeigen im Detail auch die bevorzugt verwendbaren Materialien, insbesondere Materialien zum Sicherstellen eines schwachen Untergrundsignals, insbesondere boriertes Polyethylen M1 (insbesondere 5 oder 10%) für die Abschirmung 19 von Neutronenstrahlung (abschnittsweise auch Beton für die Abschirmung 19 von Gammastrahlung), Blei oder Bismut M2 für den Kollimator 17 bzw. zwecks Abschirmung von Gammastrahlung, Graphit M3 für die Moderationskammer 12 oder den Probenträger 14 oder die Probenkammer 15, Lithium-6-Polyethylen oder Lithium-6-Silikon M6 für eine Abschirmung des Detektors, Germanium M10 für den Kristall 16.1. Ein Bereich zwischen einzelnen Komponenten des Detektors 16, insbesondere zwischen einer Detektorendkappe 16.2 und dem Kristall 16.1, ist mit Luft M4 gefüllt, insbesondere im Inneren des Kollimators. Je nach Art des Neutronengenerators oder Detektors können für einzelne weitere Komponenten adäquate Materialien M7, M8 gewählt werden, insbesondere aus der Liste umfassend Kupfer, Aluminium, Kunststoff.

Fig. 2A zeigt beispielhaft zwei Partitionen P1, P2 von n Partitionen Pn in Form von Zylindersegmenten (Kuchenstücken), bei einer zylindrischen Probe 1. Die Probe 1 kann dabei z.B. auch durch ein Fass bereitgestellt werden, mit einer bestimmten Füllhöhe einer Schüttung oder eines Fluids. Das Fass kann ein recht großes Volumen aufweisen, z.B. 200 Liter.

In Fig. 2A ist zudem die Ausrichtung der einzelnen Komponenten gemäß der Längsachse x, der Querachse y und der vertikalen Achse bzw. Hochachse z zu erkennen. Die Probe ist zumindest abschnittsweise zylindrisch oder z.B. als Fass ausgebildet und erstreckt sich entlang der Hochachse z, insbesondere rotationssymmetrisch um die z-Achse. Ein Positionieren in unterschiedlichen z-Höhenpositionen ist mittels der zuvor genannten Hubeinrichtung 18 möglich.

Fig. 2B zeigt eine Variante mit nur einem Detektor 16, welcher auf ein Zylindersegment kollimiert ist. Diese Anordnung lässt sich insbesondere auch kostenoptimiert bereitstellen.

Bei der jeweils in Fig. 2A, 2B gezeigten Anordnung kann eine Moderation auch ausschließlich innerhalb der Probenkammer 15 durchgeführt werden.

Fig. 2C zeigt ferner eine Detektorendkappe 16.2 und einen Kristallhalter 16.3, mittels welchen Elemente der Kristall 16.1 positioniert und ausgerichtet werden kann.

Fig. 3 zeigt ein Verfahren in sechs Schritten S1 bis S6, welche Schritte jeweils Unterschritte umfassen. Zwischen den einzelnen Schritten können Regelungspunkte R1 bis R5 vorgesehen sein, sei es für eine Benutzerabfrage, sei es für eine automatische, computergesteuerte Abfrage.

In einem ersten Schritt S1 erfolgt ein Generieren von Neutronen und ein Bestrahlen einer Probe mit Neutronen, wobei der erste Schritt wenigstens einen der folgenden Unterschritte umfassen kann: Einstellen (Steuern oder Regeln) der Neutronenquellstärke (S1.1), Moderation (S1.2), simulatives Berechnen des Neutronenspektrums (S1.3), simulatives Berechnen des Neutronenflusses (S1.4). In einem ersten Regelungspunkt R1 kann insbesondere eine wahlweise wiederholte Abfrage bezüglich der Neutronenquellstärke erfolgen, sei es eine automatisierte Datenabfrage, sei es im Rahmen einer Benutzereingabe/Benutzerführung.

**EP 3 410 104 B1**

In einem zweiten Schritt S2 erfolgt eine Probenspezifikation und Messung, wobei der zweite Schritt wenigstens einen der folgenden Unterschritte umfassen kann: Erfassen der Probenmasse und wahlweise auch der Probengeometrie (S2.1), Kollimation (S2.2), Erfassen oder Einstellen der Probenpartitionierung (S2.3), Verlagern/Positionieren der Probe, insbesondere durch Translation und/oder Rotation (S2.4). Der Schritt S2.1 kann in Verbindung mit einer Transmissionsmessung erfolgen, insbesondere indem radioaktive Gammastrahlung auf die Probe emittiert wird, beispielsweise zum Erfassen einer Füllhöhe in einem Fass (Probe), oder zum Bestimmen einer Matrixdichte. Die Transmissionsmessung kann also als erweiterte Messung zum Charakterisieren der Probe aufgefasst werden, und kann weitere Daten liefern, insbesondere auch hinsichtlich möglichst zweckdienlicher Partitionierung. In einem zweiten Regelungspunkt R2 kann insbesondere eine wahlweise wiederholte Abfrage bezüglich der Probenmasse, Probengeometrie und Partitionierung erfolgen, sei es eine automatisierte Datenabfrage in Kommunikation mit einer Kameraeinheit und/oder eine Wägeeinheit, sei es im Rahmen einer Benutzereingabe/Benutzerführung. Im zweiten Regelungspunkt R2 kann insbesondere auch ein Positionieren bzw. Ausrichten der Probe erfolgen.

In einem dritten Schritt S3 erfolgt eine Detektion bzw. ein Messen emittierter Gammastrahlung, wobei der dritte Schritt wenigstens einen der folgenden Unterschritte umfassen kann: Detektion/Messen von Gammastrahlung und Auswerten des Gammaspektrums (S3.1), Element-/Peakidentifizierung (S3.2), Interferenzanalyse (S3.3), Auswertung von Peaks, insbesondere Auswertung hinsichtlich Fläche und Untergrund (S3.4). In einem dritten Regelungspunkt R3 kann insbesondere eine Übergabe und Überprüfung von Zwischenergebnissen erfolgen. Dabei kann der Regelungspunkt R3 eine Plausibilitätsprüfung umfassen, insbesondere im Rahmen einer Aussage über die homogene Element- und Massenverteilung in der Probe bzw. in einer jeweiligen Partition, wobei wahlweise (beispielsweise bei einer Abweichung größer als ein maximaler Schwellwert) eine Iteration zurück zu Schritt S2 erfolgen kann, insbesondere um basierend auf einem neuen kollimierten Ansatz zu messen.

In einem vierten Schritt S4 erfolgt ein Auswerten gemessener Gammastrahlung, insbesondere zur Berechnung der energieabhängigen Photopeak-Effizienz, wobei der vierte Schritt wenigstens einen der folgenden Unterschritte umfassen kann: Auswerten von Wechselwirkungen innerhalb der Probe (S4.1) zur Berechnung der energieabhängigen Photopeak-Effizienzen, Auswerten von Wechselwirkungen in einem jeweiligen Detektor (S4.2), Bestimmen des Raumwinkels zwischen Probe und Detektor (S4.3), Bestimmen von Photopeak-Effizienzen, insbesondere (initialer) Photopeak-Effizienzen (S4.4). In einem vierten Regelungspunkt R4 kann insbesondere eine Übergabe und Überprüfung von Zwischenergebnissen erfolgen.

In einem fünften Schritt S5 erfolgt das Bestimmen der Masse wenigstens eines Elements, wobei der fünfte Schritt wenigstens einen der folgenden Unterschritte umfassen kann: Bestimmen wenigstens einer Elementmasse oder Bestimmen von Elementmassenverhältnissen (S5.1), Bestimmen wenigstens eines Wirkungsquerschnittes (S5.2), insbesondere jeweils entweder aus Schritt S1 oder Schritt S4. In einem fünften Regelungspunkt R5 kann insbesondere eine Übergabe und Überprüfung von Zwischenergebnissen erfolgen. Dabei kann der Regelungspunkt R5 eine Plausibilitätsprüfung umfassen, insbesondere ein Gegenüberstellen bzw. Vergleichen von quantifizierten Elementmassen und der Gesamtmasse der Probe.

In einem sechsten Schritt S6 erfolgt die Berechnung der Neutronik, wobei der sechste Schritt wenigstens einen der folgenden Unterschritte umfassen kann: Auswerten von Wechselwirkungen, insbesondere Neutronenwechselwirkungen innerhalb der Probe (S6.1), insbesondere durch Diffusionsapproximation, Auswerten eines Neutronenspektrums (S6.2), Auswerten eines Neutronenflusses (S6.3), insbesondere durch Diffusionsapproximation.

Regelungspunkt R1 bis R5 können jeweils eine optionale Rückkopplung (Regelschleife) zum vorhergehenden Schritt umfassen, insbesondere im Rahmen einer Überprüfung einer Benutzereingabe oder eines Zwischenergebnisses. Die Schritte S4 bis S6 können unabhängig von den einzelnen Regelungspunkten iterativ durchgeführt werden, insbesondere kontinuierlich während der Auswertung von Gammastrahlung aus kontinuierlich bestrahlten Proben. Die Iteration wird abgebrochen, wenn sich die zu bestimmende Elementmasse nicht mehr oder zumindest nicht mehr wesentlich verändert, beispielsweise ab einem vordefinierbaren Schwellwert für eine Differenz.

Fig. 4 zeigt den Sichtbereich eines jeweiligen Detektors 16A, 16B am Beispiel einer in Scheiben und Kreissegmente P1, P2, Pn partitionierten zylindrischen Probe 1. Der Sichtbereich des jeweiligen Detektors 16A, 16B muss dabei nicht notwendigerweise mit einer jeweiligen Partition übereinstimmen bzw. fluchten. Bei der Auswertung kann berücksichtigt werden, zu welchen Anteilen eine benachbarte Partition im Sichtbereich des jeweiligen Detektors liegt und simultan mit ausgewertet wird oder herausgerechnet werden soll. In jeder Höhenposition liegen 12 Partitionen vor. Die gesamte Probe kann dann durch sechs Drehungen und durch die entsprechende Anzahl von translatorischen Höhenverlagerungsschritten (hier fünf Ebenen, also vier Verlagerungsschritte in z-Richtung) analysiert werden. Jede Partition wird beispielsweise über einen Zeitraum von einigen Sekunden bis Minuten bestrahlt und gemessen.

In Fig. 5 ist eine Vorrichtung 10 gezeigt, bei welcher der Probenträger 14 in der Höhe um einen beträchtlichen Weg (Pfeil mit Punktlinie) nach oben verlagert werden kann. Die Probenkammer 15 ist durch Material M3 abgegrenzt, welches Material M3 zusammen mit der Probe 1 in eine luftgefüllte Kavität oberhalb der Probe 1 verlagert werden kann. Die Dreh- und Hubeinrichtung 18 ist mittels einer Kupplung umfassend eine Welle 18.1 mit dem Probenträger 14 verbunden, abgesehen davon aber außerhalb der Neutronenabschirmung angeordnet und von der Probenkammer abgeschottet. Dadurch kann sichergestellt werden, dass die Neutronen nicht zur Dreh- und Hubeinrichtung gelangen. Eine Wegsamkeit der Neutronen zur Dreh- und Hubeinrichtung wird verhindert. Das Material, in welchem die Welle 18.1 geführt ist, ist bevorzugt Graphit. Wie in Fig. 5 angedeutet, kann in einem Graphitblock eine Durchfürhung für die Welle 18.1 vorgesehen sein. Die Dreh- und Hubeinrichtung 18 ist bevorzugt ausschließlich mittels der Welle 18.1 mit dem Probenträger 14 verbunden. Die Neutronenabschirmung wird dann ausschließlich durch die Welle durchbrochen. Die Dreh- und Hubeinrichtung ist abgeschottet hinter der wirksamen Neutronenabschirmung angeordnet.

**Bezugszeichenliste**

| | |
|---|---|
| 1 | Probe |
| 10 | Vorrichtung zur Multielementanalyse basierend auf Neutronenaktivierung |
| 11 | Neutronengenerator |
| 11.1 | Neutronenquelle bzw. Neutronenquellpunkt |
| 12 | Moderationskammer |
| 14 | Probenträger |
| 15 | Probenkammer |
| 16 | Detektoreinheit |
| 16A, 16B | einzelner Detektor |
| 16.1 | Kristall eines einzelnen Detektors |
| 16.2 | Detektorendkappe |
| 16.3 | Kristallhalter |
| 17 | Kollimator |
| 18 | Dreh- und Hubeinrichtung |
| 18.1 | Kupplung, insbesondere Welle |
| 19 | Abschirmung |
| 20 | Steuerungseinrichtung |
| 21 | Datenspeicher |
| 22 | kernphysikalische Datenbank |
| 23 | Eingabeeinheit/-maske |
| 24 | Transmissionsmesseinheit |
| 25 | Kameraeinheit |
| 27 | Wägeeinheit |
| 30 | Computerprogrammprodukt |

| | |
|---|---|
| A16 | Sichtachse des Detektors |
| M1 | Material 1, insbesondere boriertes Polyethylen und/oder Beton |
| M2 | Material 2, insbesondere Blei und/oder Bismut |
| M3 | Material 3, insbesondere Graphit |
| M4 | Material bzw. Medium 4, insbesondere Luft |
| M6 | Material 6, insbesondere Lithium-Polyethylen und/oder Lithium-Silikon |
| M7 | Material 7, insbesondere Aluminium kohlenstofffaserverstärkter Kunststoff |
| M8 | Material 8, insbesondere Kupfer oder Kunststoff |
| M10 | Material 10, insbesondere Germanium |
| P1, P2, Pn | Partitionen der Probe |
| R1 | erster Regelungspunkt |
| R2 | zweiter Regelungspunkt |
| R3 | dritter Regelungspunkt |
| R4 | vierter Regelungspunkt |
| R5 | fünfter Regelungspunkt |

| | |
|---|---|
| S1 | erster Schritt, insbesondere Generieren von Neutronen und Bestrahlen mit Neutronen |
| S1.1 | Einstellen (Steuern oder Regeln) der Neutronenquellstärke |
| S1.2 | Moderation |
| S1.3 | simulative Berechnung des Neutronenspektrums |
| S1.4 | simulative Berechnung des Neutronenflusses |
| S2 | zweiter Schritt, insbesondere Probenspezifikation und Messung |

S2.1    Erfassen von Probenmasse und/oder Probengeometrie und/oder Transmissionsmessung
S2.2    Kollimation
S2.3    Erfassen oder Einstellen der Probenpartitionierung
S2.4    Verlagern/Positionieren der Probe, insbesondere durch Translation und/oder Rotation
S3      dritter Schritt, insbesondere Detektion/Messen emittierter Gammastrahlung und Auswerten gemessener Gammastrahlung
S3.1    Detektion/Messen von Gammastrahlung bzw. Auswerten des Gammaspektrums
S3.2    Element-/Peakidentifizierung
S3.3    Interferenzanalyse
S3.4    Auswertung von Peaks, insbesondere hinsichtlich Peak-Fläche und Untergrund
S4      vierter Schritt, insbesondere Auswerten gemessener Gammastrahlung
S4.1    Auswerten von Wechselwirkungen innerhalb der Probe
S4.2    Auswerten von Wechselwirkungen im Detektor
S4.3    Bestimmen des Raumwinkels zwischen Probe und Detektor
S4.4    Bestimmen von Photopeak-Effizienzen, insbesondere initialer Photopeak-Effizienzen
S5      fünfter Schritt, insbesondere Bestimmen wenigstens eines Elements, insbesondere der Masse
S5.1    Bestimmen wenigstens einer Elementmasse oder von Elementmassenverhältnissen
S5.2    Bestimmen wenigstens eines Wirkungsquerschnittes
S6      sechster Schritt, insbesondere Berechnung der Neutronik
S6.1    Auswerten von Wechselwirkungen innerhalb der Probe
S6.2    Auswerten eines Neutronenspektrums
S6.3    Auswerten eines Neutronenflusses

v1      erste/r Variable/Parameter, insbesondere manuell eingebbar, insbesondere Neutronenquellstärke
v2      zweite/r Variable/Parameter, insbesondere manuell eingebbar, insbesondere Probengeometrie
v3      dritte/r Variable/Parameter, insbesondere manuell eingebbar, insbesondere Probenmasse
x       Längsachse
y       Querachse
z       vertikale Achse bzw. Hochachse

**Patentansprüche**

1.  Verfahren zur Multielementanalyse basierend auf Neutronenaktivierung, mit den Schritten:

    Generieren von schnellen Neutronen mit Energie im Bereich von 10keV bis 20MeV;
    Bestrahlen einer Probe (1) mit den Neutronen,
    wobei das Verfahren ein Moderieren der schnellen Neutronen umfasst;
    Messen der aus der bestrahlten Probe emittierten Gammastrahlung zum Bestimmen wenigstens eines Elements der Probe;
    wobei das Bestrahlen der Probe ungepulst auf kontinuierliche Weise erfolgt, wobei das Messen während des Bestrahlens erfolgt, wobei zum Bestimmen des wenigstens einen Elements zumindest prompte oder sowohl prompte als auch verzögerte Gammastrahlung aus der kontinuierlichen Neutronenbestrahlung gemessen und ausgewertet wird, **dadurch gekennzeichnet, dass** das Bestimmen umfasst: energieaufgelöstes Bestimmen des Neutronenflusses innerhalb der Probe bzw. der einzelnen Partitionen der Probe durch ein analytisches Verfahren und Bestimmen von energieabhängigen Photopeak-Effizienzen der emittierten Gammastrahlung,

2.  Verfahren nach Anspruch 1, wobei Neutronen generiert werden mit dem Neutronenenergiewert 2.45MeV oder mit wenigstens einem Neutronenenergiewert aus der folgenden Gruppe: 2.45MeV, 14.1MeV; oder wobei Neutronen generiert werden mit einer Neutronenenergie von maximal 10MeV.

3.  Verfahren nach einem der vorhergehenden Ansprüche, wobei zum zusätzlichen Bestimmen wenigstens eines Elements zumindest zeitweise ausschließlich verzögerte Gammastrahlung aus kontinuierlicher Neutronenbestrahlung gemessen und ausgewertet wird; oder wobei die Probe (1), insbesondere einzelne Partitionen (P1, P2, Pn) der Probe, kollimiert gemessen wird/werden, insbesondere mittels wenigstens eines Detektors (16A) oder mittels einer Mehrzahl von Detektoren (16A, 16B) mit spezifisch bezüglich der Geometrie der Partition kollimiertem Sichtbereich; oder wobei das Messen, Bestimmen und/oder Auswerten individuell bezüglich einzelner Partitionen (P1, P2, Pn) der Probe erfolgt, welche Partitionen vordefiniert sind oder manuell oder automatisch vorgebbar sind, insbesondere durch Kollimation.

4. Verfahren nach einem der vorhergehenden Ansprüche, wobei zum Bestimmen wenigstens eines Elements die aus der Probe (1) emittierte Gammastrahlung energieaufgelöst gemessen wird, nämlich durch Bestimmen von Photopeakzählraten, wobei das Bestimmen ein energieaufgelöstes Auswerten der gemessenen Gammastrahlung gemäß wenigstens einem Gammaspektrum umfasst, nämlich gemäß einem mit einem jeweiligen Detektor (16A, 16B) erfassten Gammaspektrum; oder wobei das Messen/Auswerten ein energieaufgelöstes Messen/Auswerten der Intensität der aus der Probe (1) emittierten Gammastrahlung umfasst.

5. Verfahren nach einem der vorhergehenden Ansprüche, wobei das Bestimmen ein Auswerten der gemessenen Gammastrahlung umfasst, wobei das Auswerten umfasst: Korrelieren wenigstens eines Photopeaks einer Zählrate-Energie-Darstellung basierend auf dessen Energie mit einem Element der Probe (1); oder wobei das Auswerten ferner umfasst: Quantifizieren des Masseanteils wenigstens eines Elements der Probe, insbesondere indem der Anteil wenigstens eines in der Probe enthaltenen Elements nach Abzug eines Untergrundsignals aus der Nettofläche eines/des Photopeaks ausgewertet wird, den das Element in einer Zählrate-Energie-Darstellung hervorruft; oder wobei die Probe (1) in Partitionen (P1, P2, Pn) unterteilt wird und die emittierte Gammastrahlung bezüglich einer jeweiligen Partition gemessen und ausgewertet wird.

6. Verfahren nach einem der vorhergehenden Ansprüche, wobei das Bestimmen ein Auswerten der gemessenen Gammastrahlung umfasst, wobei das Auswerten basierend auf der Annahme einer homogenen Massen- und/oder Elementverteilung in der Probe (1) erfolgt, insbesondere einer homogenen Massen- und/oder Elementverteilung in wenigstens einer von mehreren Partitionen (P1, P2, Pn) der Probe; oder wobei das Bestimmen ein Auswerten der gemessenen Gammastrahlung umfasst, wobei das Auswerten umfasst: Berechnen des Neutronenflusses innerhalb der Probe (1), insbesondere innerhalb einer jeweiligen Partition (P1, P2, Pn) der Probe, basierend auf einer Diffusionsapproximation der linearen Boltzmann-Gleichung, insbesondere orts- und/oder energieaufgelöst, insbesondere basierend auf dem folgenden Zusammenhang:

$$\Phi(\underline{x}, E_n) = \int_{S^2} \Psi(\underline{x}, E_n, \Omega) \, d\Omega \quad;$$

oder Berechnen des Neutronenspektrums innerhalb der Probe (1), insbesondere innerhalb einer jeweiligen Partition (P1, Pn, Pn) der Probe, insbesondere orts- und/oder energieaufgelöst, insbesondere basierend auf dem folgenden Zusammenhang:

$$\Phi(\underline{x}, E_n) = \int_{S^2} \Psi(\underline{x}, E_n, \Omega) \, d\Omega \quad.$$

7. Verfahren nach einem der Ansprüche 1 bis 5, wobei das Bestimmen ein Auswerten der gemessenen Gammastrahlung umfasst, wobei das Auswerten umfasst: Berechnen von energieabhängigen Photopeak-Effizienzen sowie von Neutronenfluss und Neutronenspektrum innerhalb der Probe (1) oder innerhalb einer einzelnen Partition (P1, P2, Pn) der Probe, insbesondere Berechnen von Neutronenfluss und Neutronenspektrum durch ein approximatives Verfahren, jeweils basierend auf dem folgenden Zusammenhang:

$$\Phi(\underline{x}, E_n) = \int_{S^2} \Psi(\underline{x}, E_n, \Omega) \, d\Omega \quad;$$

oder wobei das Bestimmen ein Auswerten der gemessenen Gammastrahlung umfasst, wobei beim Auswerten eine Mehrzahl von Gamma-Energien jeweils wenigstens eines Elements in einer jeweiligen Partition (P1, P2, Pn) der Probe (1) beim Quantifizieren des Masseanteils eines jeweiligen Elements der jeweiligen Partition basierend auf dem folgenden Zusammenhang analysiert werden:

$$(P_R)_{E_\gamma}^i = \frac{N_A}{M} \cdot \sum_{k=1}^{N} m_k \cdot \varepsilon_{E_\gamma}^{i \leftarrow k} \cdot \sigma_{E_\gamma}^{ik} \cdot \Phi_k^i \quad.$$

8. Verfahren nach einem der vorhergehenden Ansprüche, wobei das Verfahren basierend auf den Eingangsgrößen Neutronenquellstärke, Probengeometrie und Probenmasse durchgeführt wird, insbesondere ausschließlich basierend auf diesen drei Eingangsgrößen; oder wobei das Verfahren automatisiert durchgeführt wird, insbesondere durch Auswerten der gemessenen Gammastrahlung basierend auf abgesehen von den drei Parametern Neutronenquellstärke bei der Bestrahlung, Probengeometrie und Probenmasse, ausschließlich numerisch ermittelten Parametern; oder wobei zum Charakterisieren der Probe wenigstens eine Messung aus der folgenden Gruppe ausgeführt wird: Transmissionsmessung, Probenwägung, optische Erfassung der Probengeometrie; oder wobei das Verfahren iterativ bezüglich einzelner Elemente oder bezüglich der kompletten Zusammensetzung der Probe oder bezüglich einzelner Partitionen der Probe durchgeführt wird.

9. Verfahren nach einem der vorhergehenden Ansprüche, wobei das Verfahren durchgeführt wird unter Verwendung eines Neutronengenerators (11) eingerichtet zur Fusion von Deuteronen, insbesondere mit Deuteriumgas als Betriebsstoff, zum Generieren von schnellen Neutronen zur Multielementanalyse einer Probe basierend auf Neutronenaktivierung, insbesondere zum kontinuierlichen, ungepulsten Bestrahlen der Probe.

10. Verfahren nach einem der vorhergehenden Ansprüche, wobei das Verfahren durchgeführt wird mittels einer Steuerungseinrichtung (20) eingerichtet zum Ansteuern wenigstens eines Neutronengenerators (11) der Vorrichtung zur Multielementanalyse basierend auf Neutronenaktivierung, wobei der Neutronengenerator (11) eingerichtet ist zum Generieren von schnellen Neutronen mit Energie im Bereich von 10keV bis 20MeV, wobei die Steuerungseinrichtung (20) eingerichtet ist zum Ansteuern des Neutronengenerators zum Generieren der Neutronen und zum Bestrahlen einer Probe (1) auf ungepulste kontinuierliche Weise, und wobei die Steuerungseinrichtung ferner eingerichtet ist zum Ansteuern wenigstens eines Detektors (16, 16A, 16B) zum kontinuierlichen und/oder zeitweisen Messen von aus der Probe oder einer einzelnen Partition (P1, P2, Pn) der Probe emittierter Gammastrahlung simultan zur Bestrahlung.

11. Verwendung einer Detektoreinheit (16) mit wenigstens einem Detektor (16A, 16B) bei einem Verfahren zur Multielementanalyse einer Probe (1) gemäß einem der vorhergehenden Ansprüche basierend auf Neutronenaktivierung eingerichtet zum kontinuierlichen Messen sowohl prompter als auch verzögerter Gammastrahlung emittiert aufgrund von kontinuierlicher Bestrahlung der Probe mit Neutronen, wobei die Gammastrahlung zumindest teilweise auch kontinuierlich und simultan zur kontinuierlichen Bestrahlung gemessen wird, wobei die Verwendung der Detektoreinheit (16) mit einer Mehrzahl von Detektoren (16A, 16B) jeweils kollimiert oder partitionskollimiert oder einstellbar kollimierbar bezüglich wenigstens einer Partition (P1, P2, Pn) oder bezüglich wenigstens einer vordefinierbaren Geometrie einer Partition erfolgt.

12. Computerprogrammprodukt (30) zur Multielementanalyse basierend auf Neutronenaktivierung gemäß einem Verfahren nach einem der vorhergehenden Verfahrensansprüche, und eingerichtet zum Bestimmen wenigstens eines Elements einer ungepulst kontinuierlich mit Neutronen bestrahlten Probe (1) durch Auswerten von aus der Probe emittierter Gammastrahlung, nämlich prompter und/oder verzögerter Gammastrahlung, basierend auf energieabhängigen Photopeak-Effizienzen sowie Neutronenfluss und Neutronenspektrum innerhalb der Probe oder innerhalb einer einzelnen Partition (P1, P2, Pn) der Probe, und eingerichtet zum Auswerten von zumindest prompter oder sowohl prompter als auch verzögerter Gammastrahlung aus kontinuierlicher Neutronenbestrahlung, **dadurch gekennzeichnet, dass** das Bestimmen umfasst: energieaufgelöstes Bestimmen des Neutronenflusses innerhalb der Probe bzw. der einzelnen Partitionen der Probe durch ein analytisches Verfahren und Bestimmen von energieabhängigen Photopeak-Effizienzen der emittierten Gammastrahlung, insbesondere eingerichtet zum Auswerten partitionskollimiert gemessener Gammastrahlung basierend auf dem folgenden Zusammenhang:

$$(P_R)^i_{E_\gamma} = \frac{N_A}{M} \cdot \sum_{k=1}^{iv} m_k \cdot \varepsilon^{i \leftarrow k}_{E_\gamma} \cdot \sigma^{ik}_{E_\gamma} \cdot \Phi^i_k$$

13. Vorrichtung (10) zur Multielementanalyse basierend auf Neutronenaktivierung, mit:

einem Neutronengenerator (11) eingerichtet zum Generieren von schnellen Neutronen mit Energie im Bereich von 10keV bis 20MeV;
einer Proben- und Moderationskammer (15, 12) und einem darin angeordneten Probenträger (14);
einer Detektoreinheit (16) mit wenigstens einem Detektor (16A, 16B) eingerichtet zum Messen von aus einer bestrahlten Probe emittierter Gammastrahlung zum Bestimmen wenigstens eines Elements der Probe;

wobei die Vorrichtung (10) eingerichtet ist zum ungepulsten kontinuierlichen Bestrahlen der Probe (1) und eingerichtet ist zum Messen von aus der kontinuierlich bestrahlten Probe emittierter zumindest prompter oder sowohl prompter als auch verzögerter Gammastrahlung während des Bestrahlens, ferner mit einer Steuerungseinrichtung (20) eingerichtet zum automatisierten kontinuierlichen Bestrahlen und eingerichtet zum Steuern/Regeln eines automatisierten Messens kontinuierlich applizierter Neutronenbestrahlung während des Bestrahlens, **dadurch gekennzeichnet, dass** die Vorrichtung eingerichtet ist zum Bestimmen wenigstens eines Elements, indem der Neutronenfluss innerhalb der Probe bzw. der einzelnen Partitionen der Probe durch ein analytisches Verfahren energieaufgelöst bestimmt wird und indem energieabhängige Photopeak-Effizienzen der emittierten Gammastrahlung bestimmt werden,

insbesondere eingerichtet zum Ausführen eines Verfahrens nach einem der vorhergehenden Verfahrensansprüche.

14. Vorrichtung nach dem vorhergehenden Vorrichtungsanspruch, wobei der Neutronengenerator (11) eine Neutronenquelle (11.1) eingerichtet zur Fusion von Deuteronen umfasst, insbesondere mit Deuteriumgas als Betriebsstoff; oder wobei die Vorrichtung wenigstens eine ein Untergrundsignal der Vorrichtung schwächende Komponente aus der folgenden Gruppe umfasst: wenigstens einen den Sichtbereich des Detektors auf die Probe, insbesondere auf eine Partition der Probe einschränkenden Kollimator (17), bevorzugt einen Kollimator aus Blei oder Bismut, und/oder die Moderationskammer (12) aus Graphit besteht, und/oder eine Abschirmung (19) aus boriertem Polyethylen, und/oder eine Probenkammer (15) und/oder einen Probenträger (14) jeweils zumindest teilweise aus Graphit oder vollständig fluorierten Kunststoffen oder Beryllium.

15. Vorrichtung nach einem der vorhergehenden Vorrichtungsansprüche, ferner umfassend ein Computerprogrammprodukt (30) oder einen Datenspeicher (21) damit, wobei das Computerprogrammprodukt eingerichtet ist zum Bestimmen wenigstens eines Elements der Probe (1) durch Auswerten der gemessenen Gammastrahlung basierend auf energieabhängigen Photopeak-Effizienzen sowie Neutronenfluss und Neutronenspektrum innerhalb der Probe oder innerhalb einer einzelnen Partition (P1, P2, Pn) der Probe durch ein analytisches Verfahren; ferner mit einer Dreh- und/oder Hubeinrichtung (18) eingerichtet zum translatorischen und/oder rotatorischen Verlagern eines/des Probenträgers (14) oder der Probe, bevorzugt einer aus einer/der Probenkammer (15) der Vorrichtung entkoppelte Dreh- und/oder Hubeinrichtung; und ferner mit der Steuerungseinrichtung (20) eingerichtet zum automatisierten kontinuierlichen Bestrahlen und/oder eingerichtet zum Steuern/Regeln eines automatisierten Messens kontinuierlich applizierter Neutronenbestrahlung während des Bestrahlens, insbesondere eingerichtet zum iterativen automatisierten Auswerten der emittierten und gemessenen Gammastrahlung bezüglich einzelner Elemente oder bezüglich der kompletten Zusammensetzung der Probe oder bezüglich einzelner Partitionen der Probe basierend auf abgesehen von den drei Parametern Neutronenquellstärke bei der Bestrahlung, Probengeometrie und Probenmasse, ausschließlich numerisch ermittelten oder von der Steuerungseinrichtung ausgelesenen Parametern.

**Claims**

1. A method for a multielement analysis on the basis of neutron activation, including the steps of:

   generating fast neutrons with an energy in the range of 10 keV to 20 MeV;
   irradiating the sample (1) with the neutrons, wherein the method comprises moderating the fast neutrons;
   measuring the gamma radiation emitted by the irradiated sample in order to determine at least one element of the sample;
   wherein the sample is irradiated continuously in non-pulsed fashion, wherein the measurement is implemented during the irradiation, wherein at least prompt or both prompt and delayed gamma radiation from the continuous neutron irradiation is measured and evaluated for the purposes of determining the at least one element, **characterized in that** the determination comprises: energy-resolved determination of the neutron flux within the sample respectively within the respective partitions (P1, P2, Pn) of the sample (1) through an analytical process and calculation of energy-dependent photopeak efficiencies of the emitted gamma radiation.

2. The method as claimed in claim 1, wherein neutrons are generated with a neutron energy value of 2.45 MeV or with at least one neutron energy value from the following group: 2.45 MeV, 14.1 MeV; or wherein neutrons are generated with a neutron energy of maximum 10 MeV.

3. The method according to either of the preceding claims, wherein only delayed gamma radiation from continuous neutron irradiation is measured and evaluated, at least intermittently, in order to additionally determine at least one element; or wherein the sample (1), especially individual partitions (P1, P2, Pn) of the sample (1) is/are measured in collimated fashion, especially by at least one detector (16A) or by a plurality of detector (16A, 16B) having collimated field of view with respect to the partition's geometry; or wherein the measurement, determination and/or evaluation is implemented on an individual basis in respect of the individual partitions (P1, P2, Pn) of the sample, said partitions being predefined or predeterminable manually or automatically, especially by way of collimation.

4. The method as claimed in any one of the preceding claims, wherein, for the purposes of determining the at least one element, the gamma radiation emitted by the sample (1) is measured in energy-resolved fashion, namely by determining photopeak count rates, wherein the determination comprises an energy-resolved evaluation of the measured gamma radiation in accordance with at least one gamma spectrum, namely in accordance with a gamma spectrum detected by a respective detector (16A, 16B); or wherein the measurement/evaluation comprises an energy-resolved measurement/evaluation of the intensity of the gamma radiation emitted by the sample (1).

5. The method as claimed in any one of the preceding claims, wherein the determination comprises an evaluation of the measured gamma radiation, wherein the evaluation comprises: correlating, on the basis of its energy, at least one photopeak in the count rate-energy diagram with an element of the sample (1); or wherein the evaluation further comprises: quantifying the mass fraction of the at least one element of the sample, especially by virtue of the component of at least one element contained in the sample being evaluated after subtracting a background signal from the net area of a/the photopeak, which is caused by the element in a count rate-energy diagram; or wherein the sample (1) is subdivided into partitions (P1, P2, Pn) and the emitted gamma radiation is measured and evaluated with respect to a respective partition.

6. The method as claimed in any one of the preceding claims, wherein the determination comprises an evaluation of the measured gamma radiation, wherein the evaluation is implemented on the basis of the assumption of a homogenous mass and/or element distribution in the sample (1), especially of a homogenous mass and/or element distribution in at least one of several partitions (P1, P2, Pn) of the sample; or wherein the determination comprises an evaluation of the measured gamma radiation, wherein the evaluation comprises: calculation of the neutron flux within the sample (1), especially within a respective partition of the sample (1), on the basis of a diffusion approximation of the linear Boltzmann equation, in particular in spatially resolved and/or energy-resolved fashion, in particular on the basis of the following relationship:

$$\Phi(\underline{x}, E_n) = \int_{S^2} \Psi(\underline{x}, E_n, \Omega) \, d\Omega \; ;$$

or wherein the neutron spectrum is calculated within the sample (1), especially within a respective partition (P1, Pn, Pn) of the sample, in particular in spatially resolved and/or energy-resolved fashion, in particular on the basis of the following relationship:

$$\Phi(\underline{x}, E_n) = \int_{S^2} \Psi(\underline{x}, E_n, \Omega) \, d\Omega \; .$$

7. The method as claimed in any one of claims 1 to 5, wherein the determination comprises an evaluation of the measured gamma radiation, wherein the evaluation comprises: calculating energy-dependent photopeak efficiencies and neutron flux and neutron spectrum within the sample (1) or within an individual partition (P1, P2, Pn) of the sample, especially calculating neutron flux and neutron spectrum by way of an approximation method in each case on the basis of the following relationship:

$$\Phi(\underline{x}, E_n) = \int_{S^2} \Psi(\underline{x}, E_n, \Omega) \, d\Omega \; ;$$

or wherein the determination comprises an evaluation of the measured gamma radiation, wherein, during the evaluation, a multiplicity of gamma energies, respectively of at least one element in the respective partition (P1, P2, Pn) of the sample (1), are analyzed when quantifying the mass fraction of the respective element in the respective petition, said analysis being based on the following relationship:

$$(P_R)_{E_\gamma}^i = \frac{N_A}{M} \cdot \sum_{k=1}^{N} m_k \cdot \varepsilon_{E_\gamma}^{i \leftarrow k} \cdot \sigma_{E_\gamma}^{ik} \cdot \Phi_k^i$$

.

8. The method as claimed in any one of the preceding claims, wherein the method is carried out on the basis of the input variables of neutron source strength, sample geometry and sample mass, in particular exclusively on the basis of said three input variables; or wherein the method is carried out in automated fashion, especially by evaluating the measured gamma radiation on the basis of purely numerically ascertained parameters apart from the three parameters of neutron source strength during the irradiation, sample geometry and sample mass; or wherein at least one measurement of the following group of measurements is carried out for characterizing the sample: transmission measurement, sample weighing, optical detection of the sample geometry; or wherein the method is carried out iteratively with respect to individual elements or with respect to the complete composition of the sample or with respect to individual partitions of the sample.

9. The method as claimed in any one of the preceding claims, wherein the method is carried out by using a neutron generator (11) configured to fuse deuterons, especially using deuterium gas as a fuel, for the purposes of generating fast neutrons for a multielement analysis of a sample on the basis of neutron activation, especially for irradiating the sample in non-pulsed continuous fashion.

10. The method as claimed in any one of the preceding claims, wherein the method is carried out by means of a control device (20) configured for controlling at least one neutron generator (11) of the apparatus for multi-element analysis on the basis of neutron activation, wherein the neutron generator (11) is configured for generating fast neutrons exhibiting energy in the range of 10keV to 20MeV, wherein said control device (20) is configured for controlling the neutron generator for generating said neutrons and for irradiating a sample (1) in a non-pulsed continuous fashion, and wherein the control device is further configured to control at least one detector (16, 16A, 16B) for continuously and/or intermittently measuring gamma radiation emitted from said sample or from an individual partition (P1, P2, Pn) of said sample simultaneously with said irradiation.

11. Use of a detector unit (16) exhibiting at least one detector (16A, 16B) in a method for multi-element analysis of a sample (1) as claimed in any one of the preceding claims, on the basis of neutron activation configured for continuously measuring both prompt and delayed gamma radiation emitted due to continuous irradiation of the sample with neutrons, wherein the gamma radiation is at least partly also measured continuously and simultaneously with the continuous irradiation, wherein using the detector unit (16) is carried out wit a plurality of detectors (16A, 16B) each collimated or partition collimated or adjustably collimated with respect to at least one partition (P1, P2, Pn) or with respect to at least one predefinable geometry of a partition.

12. A computer program product (30) configured to carry out a multielement analysis on the basis of neutron activation as per a method according to any one of the preceding method claims ,and configured to determine at least one element of a sample (1), irradiated in non-pulsed continuous fashion with neutrons, by evaluating gamma radiation emitted by the sample, namely prompt and/or delayed gamma radiation, on the basis of energy-dependent photopeak efficiencies and neutron flux and neutron spectrum within the sample or within a respective partition (P1, P2, Pn) of the sample, and configured to evaluate at least prompt or else prompt and delayed gamma radiation from continuous neutron irradiation,
**characterized in that**
the determination comprises: energy-resolved determination of the neutron flux within the sample respectively within the respective partitions (P1, P2, Pn) of the sample (1) through an analytical process and calculation of energy-dependent photopeak efficiencies of the emitted gamma radiation, especially configured to evaluate gamma radiation measured in partition-collimated fashion on the basis of the following relationship:

$$(P_R)_{E_\gamma}^i = \frac{N_A}{M} \cdot \sum_{k=1}^{N} m_k \cdot \varepsilon_{E_\gamma}^{i \leftarrow k} \cdot \sigma_{E_\gamma}^{ik} \cdot \Phi_k^i$$

.

13. An apparatus (10) configured to carry out a multielement analysis on the basis of neutron activation, comprising:

a neutron generator (11) configured to generate fast neutrons with an energy in the range of 10 keV to 20 MeV;

a sample and moderation chamber (15, 12) and a sample holder (14) disposed therein;

a detector unit (16) comprising at least one detector (16A, 16B) configured to measure gamma radiation emitted by an irradiated sample, for the purposes of determining at least one element of the sample;

wherein the apparatus is configured to irradiate the sample (1) in non-pulsed continuous fashion, and is configured to measure simultaneously with said irradiation at least prompt or else prompt and delayed gamma radiation emitted from said sample being continuously irradiated,

the apparatus further comprising a control device (20) configured for contiuous irradiation in automated fashion and configured for controlling/adjusting an automated measuring process of continuously applied neutron irradiation during the irradiaion process **characterized in that** the apparatus is configured to determine at least one element by energy-resolved determination of the neutron flux within the sample respectively within the respective partitions (P1, P2, Pn) of the sample (1) through an analytical process and by calculation of energy-dependent photopeak efficiencies of the emitted gamma radiation, especially configured to carry out a method as claimed in any one of the preceding method claims.

14. The apparatus as claimed in the preceding apparatus claim, wherein the neutron generator (11) comprises a neutron source (11.1) configured to fuse deuterons, in particular using deuterium gas as a fuel; or wherein the apparatus comprises at least one component that attenuates a background signal of the apparatus, said component being selected from the following group: at least one collimator (17), preferably made of lead or bismuth, restricting the field of view of the detector to the sample, especially to a partition of the sample, and/or the moderation chamber (12) being made of graphite, and/or a shielding (19) made of borated polyethylene, and/or a sample chamber (15) and/or a sample carrier (14), each at least partly made of graphite or completely fluorinated plastics or beryllium.

15. The apparatus as claimed in any one of the preceding apparatus claims, further comprising a computer program product (30) or a data memory (21) therewith, wherein the computer program product is configured to determine the at least one element of the sample (1) by evaluating the measured gamma radiation on the basis of energy-dependent photopeak efficiencies and neutron flux and neutron spectrum within the sample or within an individual partition (P1, P2, Pn) of the sample through an analytical process; further comprising a rotation and/or lifting device (18) configured to displace a/the sample carrier (14) or the sample in translational and/or rotational fashion, in particular a rotation and/or lifting device that is decoupled from a/the sample chamber (15) of the apparatus; and further with the control device (20) configured for automated continuous irradiation and/or configured for controlling/adjusting an automated measurement of continuously applied neutron irradiation during the irradiation process, especially configured for iterative automated evaluation of the emitted and measured gamma radiation with respect to individual elements or with respect to the complete composition of the sample or with respect to individual partitions of the sample on the basis of parameters determined exclusively numerically or read out by the control device, respectively apart from the three parameters of neutron source strength during irradiation, sample geometry and sample mass.

## Revendications

1. Procédé d'analyse multi-éléments basé sur l'activation neutronique, comprenant les étapes:

génération de neutrons rapides dont l'énergie est comprise entre 10keV et 20MeV;

irradiation d'un échantillon (1) avec lesdits neutrons, ledite procédé comprenant la modération desdits neutrons rapides;

mesurer le rayonnement gamma émis par l'échantillon irradié pour déterminer au moins un élément de l'échantillon;

dans lequel l'irradiation de l'échantillon est effectuée de manière continue non puisée, le mesurage étant effectué pendant l'irradiation, dans lequel au moins le rayonnement gamma prompt ou à la fois prompt et retardé de l'irradiation continue des neutrons est mesuré et évalué pour déterminer le au moins un élément, **caractérisé en ce que** la détermination comprend: détermination par résolution en énergie du flux de neutrons à l'intérieur de l'échantillon ou des partitions individuelles de l'échantillon par une méthode analytique et détermination des efficacités de photopic dépendantes de l'énergie du rayonnement gamma émis.

2. Procédé selon la revendication 1, dans lequel des neutrons sont générés avec une valeur d'énergie neutronique de 2,45MeV ou avec au moins une valeur d'énergie neutronique du groupe suivant: 2,45MeV, 14,1MeV; ou dans lequel des neutrons sont générés avec une énergie neutronique d'au plus 10MeV.

**3.** Procédé selon l'une des revendications précédentes, dans lequel, pour la détermination supplémentaire d'au moins un élément, exclusivement le rayonnement gamma retardé provenant d'une irradiation neutronique continue est mesuré et évalué au moins temporairement; ou dans lequel l'échantillon (1), en particulier des partitions individuelles (P1, P2, Pn) de l'échantillon, est/sont mesuré/s par collimation, en particulier au moyen d'au moins un détecteur (16A) ou au moyen de plusieurs détecteurs (16A, 16B) ayant un champ de vision collimaté de manière spécifique par rapport à la géométrie de la partition; ou dans lequel le mesurage, la détermination et/ou l'évaluation sont effectués individuellement par rapport à des partitions individuelles (P1, P2, Pn) de l'échantillon, lesquelles partitions étant prédéfinies ou pouvant être prédéfinies manuellement ou automatiquement, en particulier par collimation.

**4.** Procédé selon l'une des revendications précédentes, dans lequel, pour la détermination d'au moins un élément, le rayonnement gamma émis par l'échantillon (1) est mesuré de manière résolue en énergie, à savoir par la détermination de taux de comptage de photopics, la détermination comprenant une évaluation résolue en énergie du rayonnement gamma mesuré selon au moins un spectre gamma, à savoir selon un spectre gamma détecté avec un détecteur respectif (16A, 16B); ou dans lequel le/la mesurage/évaluation comprend un/une mesurage/évaluation à résolution énergétique de l'intensité du rayonnement gamma émis par l'échantillon (1).

**5.** Procédé selon l'une des revendications précédentes, dans lequel la détermination comprend une évaluation du rayonnement gamma mesuré, dans lequel l'évaluation comprend: corréler au moins un photopic d'une représentation du taux de comptage et de l'énergie sur la base de son énergie avec un élément de l'échantillon (1); ou dans lequel ladite évaluation comprend en outre : quantifier la fraction massique d'au moins un élément de l'échantillon, en particulier en évaluant la fraction d'au moins un élément contenue dans l'échantillon après avoir soustrait un signal de fond de la surface nette d'un/du photopic causé par l'élément dans une représentation du taux de comptage et de l'énergie; ou dans lequel l'échantillon (1) est divisé en partitions (P1, P2, Pn) et le rayonnement gamma émis est mesuré et évalué par rapport à une partition respective.

**6.** Procédé selon l'une des revendications précédentes, dans lequel la détermination comprend une évaluation du rayonnement gamma mesuré, dans lequel l'évaluation est basée sur l'hypothèse d'une distribution homogène de la masse et/ou des éléments dans l'échantillon (1), en particulier une distribution homogène de la masse et/ou des éléments dans au moins une de plusieurs partitions (P1, P2, Pn) de l'échantillon; ou dans lequel la détermination comprend une évaluation du rayonnement gamma mesuré, dans lequel l'évaluation comprend: calcul du flux de neutrons dans l'échantillon (1), en particulier dans une partition respective (P1, P2, Pn) de l'échantillon, sur la base d'une approximation de diffusion de l'équation linéaire de Boltzmann, en particulier résolue spatialement et/ou en énergie, notamment sur la base de la relation suivante:

$$\Phi\left(\underline{x}, E_n\right) = \int_{S^2} \Psi\left(\underline{x}, E_n, \Omega\right) d\Omega \; ;$$

ou calcul du spectre neutronique dans l'échantillon (1), en particulier dans une partition respective (P1, Pn, Pn) de l'échantillon, en particulier résolu spatialement et/ou en énergie, notamment sur la base de la relation suivante:

$$\Phi\left(\underline{x}, E_n\right) = \int_{S^2} \Psi\left(\underline{x}, E_n, \Omega\right) d\Omega \; .$$

**7.** Procédé selon l'une quelconque des revendications 1 à 5, dans lequel la détermination comprend une évaluation du rayonnement gamma mesuré, dans lequel l'évaluation comprend: calcul des efficacités de photopics en fonction de l'énergie ainsi que du flux de neutrons et du spectre de neutrons dans l'échantillon (1) ou dans une partition individuelle (P1, P2, Pn) de l'échantillon, en particulier calcul du flux de neutrons et du spectre de neutrons par une méthode approximative, respectivement sur la base de la relation suivante:

$$\Phi\left(\underline{x}, E_n\right) = \int_{S^2} \Psi\left(\underline{x}, E_n, \Omega\right) d\Omega \; ;$$

ou dans lequel la détermination comprend une évaluation du rayonnement gamma mesuré, dans lequel, lors de l'évaluation, une pluralité d'énergies gamma respectivement d'au moins un élément dans des partitions respectives (P1, P2, Pn) de l'échantillon (1) sont analysées lors de la quantification de la fraction massique d'un élément respectif de la partition respective sur la base de la relation suivante:

$$(P_R)^i_{E_\gamma} = \frac{N_A}{M} \cdot \sum_{k=1}^{N} m_k \cdot \varepsilon^{i \leftarrow k}_{E_\gamma} \cdot \sigma^{ik}_{E_\gamma} \cdot \Phi^i_k$$

.

**8.** Procédé selon l'une des revendications précédentes, dans lequel le procédé est réalisé sur la base des variables d'entrée que sont l'intensité de la source de neutrons, la géométrie de l'échantillon et la masse de l'échantillon, en particulier exclusivement sur la base de ces trois variables d'entrée; ou dans lequel le procédé est réalisé automatiquement, en particulier en évaluant le rayonnement gamma mesuré sur la base de paramètres déterminés exclusivement numériquement à part les trois paramètres que sont l'intensité de la source de neutrons pendant l'irradiation, la géométrie de l'échantillon et la masse de l'échantillon; ou dans lequel au moins une mesure du groupe suivant est réalisée pour caractériser l'échantillon: mesurage de transmission, pesage de l'échantillon, détection optique de la géométrie de l'échantillon; ou dans lequel le procédé est effectuée de manière itérative par rapport à des éléments individuels ou par rapport à la composition complète de l'échantillon ou par rapport à des partitions individuelles de l'échantillon.

**9.** Procédé selon l'une des revendications précédentes, ledit procédé étant réalisé en utilisant un générateur de neutrons (11) agencé pour la fusion de deutérons, en particulier avec du deutérium gazeux comme substance de fonctionnement, pour générer des neutrons rapides pour l'analyse multi-éléments d'un échantillon basée sur l'activation neutronique, en particulier pour l'irradiation continue et non pulsée de l'échantillon.

**10.** Procédé selon l'une des revendications précédentes, le procédé étant réalisé au moyen d'un dispositif de commande (20) agencé pour commander au moins un générateur de neutrons (11) de l'appareil pour l'analyse multi-éléments basée sur l'activation neutronique, le générateur de neutrons (11) étant agencé pour générer des neutrons rapides avec une énergie dans la gamme de 10keV à 20MeV, dans lequel ledit dispositif de commande (20) est agencé pour commander ledit générateur de neutrons pour générer les neutrons et pour irradier un échantillon (1) d'une manière continue non puisée, et dans lequel ledit dispositif de commande est en outre agencé pour commander au moins un détecteur (16, 16A, 16B) pour mesurer de manière continue et/ou intermittente le rayonnement gamma émis par ledit échantillon ou une partition individuelle (P1, P2, Pn) dudit échantillon simultanément à ladite irradiation.

**11.** Utilisation d'une unité de détection (16) ayant au moins un détecteur (16A, 16B) dans un procédé d'analyse multi-éléments d'un échantillon (1) selon l'une quelconque des revendications précédentes basé sur l'activation neutronique agencée pour mesurer en continu à la fois le rayonnement gamma prompt et retardé émis en raison d'une irradiation continue de l'échantillon avec des neutrons, dans lequel le rayonnement gamma est mesuré également au moins partiellement en continu et simultanément à l'irradiation continue, dans lequel l'utilisation de l'unité de détection (16) est effectuée avec une pluralité de détecteurs (16A, 16B), chacun étant collimaté ou collimaté d'une manière partitionnée ou collimaté de manière réglable par rapport à au moins une partition (P1, P2, Pn) ou par rapport à au moins une géométrie prédéfinissable d'une partition.

**12.** Produit de programme informatique (30) pour l'analyse multi-éléments basée sur l'activation neutronique selon un procédé conforme à l'une des revendications de méthode précédentes, et agencé pour déterminer au moins un élément d'un échantillon irradié d'une manière continue non pulsé par des neutrons (1) en évaluant le rayonnement gamma émis par l'échantillon, à savoir le rayonnement gamma prompt et/ou retardé, sur la base des efficacités photopics dépendantes de l'énergie ainsi que du flux de neutrons et du spectre de neutrons dans l'échantillon ou dans une partition individuelle (P1, P2, Pn) de l'échantillon, et agencé pour évaluer au moins le rayonnement gamma prompt ou à la fois prompt et retardé de l'irradiation neutronique continue, **caractérisé en ce que** la détermination comprend: détermination par résolution en énergie du flux de neutrons à l'intérieur de l'échantillon ou des partitions individuelles de l'échantillon par une méthode analytique, et détermination des efficacités de photopics dépendantes de l'énergie du rayonnement gamma émis, en particulier agencé pour évaluer les rayonnements gamma mesurés d'une manière collimatée par partition, sur la base de la relation suivante:

$$(P_R)^i_{E_\gamma} = \frac{N_A}{M} \cdot \sum_{k=1}^{N} m_k \cdot \varepsilon^{i \leftarrow k}_{E_\gamma} \cdot \sigma^{ik}_{E_\gamma} \cdot \Phi^i_k$$

.

**13.** Appareil (10) pour l'analyse multi-éléments basée sur l'activation neutronique, comprenant:

un générateur de neutrons (11) agencé pour générer des neutrons rapides dont l'énergie est comprise entre 10keV et 20MeV;
une chambre d'échantillon et de modération (15, 12) et un porte-échantillon (14) qui y est disposé;
une unité de détection (16) comportant au moins un détecteur (16A, 16B) agencé pour mesurer le rayonnement gamma émis par un échantillon irradié afin de déterminer au moins un élément de l'échantillon;
dans lequel l'appareil (10) est agencé pour une irradiation continue non pulsée de l'échantillon (1) et est agencé pour mesurer le rayonnement gamma au moins prompt ou à la fois prompt et retardé émis par l'échantillon irradié en continu pendant l'irradiation, comprenant en outre un dispositif de commande (20) agencé pour une irradiation continue automatisée et agencé pour commander/régler un mesurage automatisé de l'irradiation neutronique appliquée en continu pendant l'irradiation,
**caractérisé en ce que** l'appareil est agencé pour déterminer au moins un élément en déterminant le flux de neutrons à l'intérieur de l'échantillon ou des partitions individuelles de l'échantillon par une méthode analytique de manière résolue en énergie et en déterminant les efficacités de photopics dépendantes de l'énergie du rayonnement gamma émis, en particulier, en particulier agencé pour effectuer un procédé selon l'une des revendications de méthode précédentes.

**14.** Appareil selon la revendication d'appareil précédente, dans lequel le générateur de neutrons (11) comprend une source de neutrons (11. 1) agencée pour la fusion de deutérons, en particulier avec du deutérium gazeux comme substance de fonctionnement; ou dans lequel l'appareil comprend au moins un composant du groupe suivant qui affaiblit un signal de fond de l'appareil: au moins un collimateur (17) limitant le champ de vision du détecteur à l'échantillon, en particulier à une partition de l'échantillon, de préférence un collimateur en plomb ou en bismuth, et/ou la chambre de modération (12) est en graphite, et/ou un écran (19) en polyéthylène boraté, et/ou une chambre d'échantillon (15) et/ou un porte-échantillon (14), respectivement au moins partiellement en graphite ou en matière plastique entièrement fluorée ou en béryllium.

**15.** Appareil selon l'une quelconque des revendications précédentes, comprenant en outre un produit de programme informatique (30) ou une mémoire de données (21) avec celui-ci, ledit produit de programme informatique étant agencé pour déterminer au moins un élément de l'échantillon (1) en évaluant le rayonnement gamma mesuré sur la base d'efficacités de photopics dépendantes de l'énergie ainsi que du flux de neutrons et du spectre de neutrons dans l'échantillon ou dans une partition individuelle (P1, P2, Pn) de l'échantillon par une méthode analytique; comprenant en outre un dispositif de rotation et/ou de levage (18) agencé pour le déplacement en translation et/ou en rotation d'un/du porte-échantillon (14) ou de l'échantillon, de préférence un dispositif de rotation et/ou de levage découplé d'une/de la chambre d'échantillon (15) de l'appareil; et en outre avec le dispositif de commande (20) agencé pour une irradiation continue automatisée et/ou agencé pour commander/régler un mesurage automatisé de l'irradiation neutronique appliquée en continu pendant l'irradiation, en particulier agencé pour une évaluation automatisée itérative du rayonnement gamma émis et mesuré par rapport à des éléments individuels ou par rapport à la composition complète de l'échantillon ou par rapport à des partitions individuelles de l'échantillon sur la base de paramètres qui, outre les trois paramètres que sont l'intensité de la source de neutrons pendant l'irradiation, la géométrie de l'échantillon et la masse de l'échantillon, sont exclusivement déterminés ou lus numériquement par le dispositif de commande.

Fig. 1

Fig. 2C

Fig. 2A

Fig. 2B

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012010162 A1
- DE 102010031844 A1
- EP 1882929 B1
- WO 0107888 A2
- EP 0493545 B1
- DE 102007029778 B4
- US 2012046867 A1
- DE 10215070 A1
- DE 1236831 B
- GB 2083212 A


**In der Beschreibung aufgeführte Nicht-Patentliteratur**

- Handbook of Prompt Gamma Activation Analysis with Neutron Beams. Kluwer Academic Publishers, 2004
- **A. TRKOV ; G. ZEROVNIK ; L. SNOJ ; M. RAVNIK.** On the self-shielding factors in neutron activation analysis. *Nuclear Instruments and Methods in Physics Research A,* 2009, vol. 610, 553-565
- **P. S. BRANTLEY ; E. W. LARSEN.** The simplified P3 approximation. *Nuclear Science and Engineering,* 2000, vol. 134, 1-21
- **R. OVERWATER.** The Physics of Big Sample Instrumental Neutron Activation Analysis, Dissertation, Delft University of Technology. Delft University Press, 1994